# EUROPÄISCHE PATENTSCHRIFT

(11) **EP 2 742 319 B1**
(45) Veröffentlichungstag und Bekanntmachung des Hinweises auf die Patenterteilung: **22.05.2019**
(21) Anmeldenummer: 12740617.1
(22) Anmeldetag: 31.07.2012
(51) Int. Cl.: G01B 11/00, G01C 1/04, G01S 5/16, H01L 27/146, H04N 3/14

(54) **MESSGERÄT ZUR BESTIMMUNG DER RÄUMLICHEN LAGE EINES MESSHILFSINSTRUMENTS**
MEASURING DEVICE FOR DETERMINING THE SPATIAL POSITION OF AN AUXILIARY MEASURING INSTRUMENT
APPAREIL DE MESURE POUR DÉTERMINER LA POSITION SPATIALE D'UN INSTRUMENT DE MESURE AUXILIAIRE

(30) Priorität: 12.08.2011 EP 11177500
(43) Veröffentlichungstag der Anmeldung: 18.06.2014
(60) Teilanmeldung: 15161383.3
(73) Patentinhaber: Leica Geosystems AG, 9435 Heerbrugg (CH)
(72) Erfinder: KWIATKOWSKI, Tomasz, CH-5054 Moosleerau (CH)
(74) Vertreter: Kaminski Harmann
(86) Internationale Anmeldenummer: PCT/EP2012/064962
(87) Internationale Veröffentlichungsnummer: WO 2013/023904

(56) Entgegenhaltungen:
- EP-A1- 1 515 152
- EP-A1- 2 133 659
- WO-A1-93/07443
- WO-A1-97/14015
- WO-A2-2004/071069
- US-A- 5 227 985
- US-A- 5 828 770
- US-A1- 2002 131 643
- US-B1- 6 310 644

## Beschreibung

Die Erfindung betrifft ein Verfahren zum fortlaufenden Bestimmen einer räumlichen Lage eines Messhilfsinstruments, mithilfe eines Lasertrackers, nach den Oberbegriffen der Anspruchs 1, entsprechende Messgeräte nach den Oberbegriffen des Anspruchs 5 sowie ein Computerprogrammprodukt nach Anspruch 9.

Messvorrichtungen, die für eine fortlaufende Verfolgung eines Zielpunkts und eine koordinative Positionsbestimmung dieses Punkts ausgebildet sind, können allgemein unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird zum einen eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z.B. mittels Laufzeit- oder Phasendifferenzmessung, und - in modernen Systemen zunehmend standardisiert - auf einem Sensor eine Ablage des empfangenen Strahls von einer Nullposition ermittelt. Mittels dieser so messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Lasertracker nach dem Stand der Technik können zusätzlich mit einer optischen Bilderfassungseinheit mit einem zweidimensionalen, lichtempfindlichen Array, z.B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera sind dabei insbesondere derart aufeinander montiert, dass ihre Positionen relativ zueinander nicht veränderbar sind. Die Kamera ist beispielsweise zusammen mit dem Lasertracker um dessen im Wesentlichen senkrechte Achse drehbar jedoch unabhängig vom Lasertracker auf und ab schwenkbar und somit insbesondere von der Optik des Laserstrahls getrennt angeordnet. Insbesondere kann die Kamera über eine Fischaugen-Optik verfügen und somit ein Schwenken der Kamera aufgrund eines sehr grossen Bilderfassungsbereichs der Kamera vermieden oder zumindest eingeschränkt nötig sein. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments mit Markierungen, deren relative Lage zueinander bekannt ist, kann so auf eine Orientierung eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Das Objekt, dessen Position und Orientierung mit dem genannten Messgerät vermessen wird, muss damit beispielsweise nicht eine Messsonde selbst sondern kann das Messhilfsinstrument sein. Dieses wird als Teil des Messsystems für die Vermessung in eine relativ zum Zielobjekt mechanisch definierte oder während der Vermessung bestimmbare Position gebracht, wobei über dessen vermessene Position und Orientierung auf die Position und gegebenenfalls die Orientierung beispielsweise der Messsonde geschlossen werden kann.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Für das Bestimmen der Orientierung des Messhilfsinstruments wird eine Erfassungsrichtung der Kamera fortlaufend so ausgerichtet, dass ein Bild in Richtung des Tracking-Strahls des Lasertrackers erfassbar ist. Die Kamera kann weiters über eine Zoomfunktion verfügen, wobei eine Vergrösserungsstufe in Abhängigkeit der bestimmten Distanz zwischen Lasertracker und Zielpunkt bzw. Messhilfsinstrument eingestellt werden kann. Mit diesen beiden Anpassungsfunktionen (Ausrichtung und Vergrösserung) kann die Kamera somit fortlaufend ein Bild erfassen, in dem das Messhilfsinstrument und insbesondere die Lichtpunkte des Messhilfsinstruments abgebildet sind. Dadurch entsteht ein elektronisch auswertbares, zweidimensionales Bild einer räumlichen Anordnung von Lichtpunkten.

Zur Auswertung des Bilds ist die Bildverarbeitungseinheit vorgesehen. Damit kann eine Identifizierung der abgebildeten Lichtpunkte, eine Bestimmung der Schwerpunkte der abgebildeten Lichtpunkte und eine Bestimmung der Bildkoordinaten dieser Schwerpunkte, aus denen beispielsweise Raumwinkel zwischen der optischen Achse des Sensors, insbesondere der Erfassungsrichtung, und der Richtung vom Sensor zu den jeweiligen Lichtpunkten berechnet werden können, erfolgen.

Ein derartiges Messgerät mit einem Lasertracker und einer Bilderfassungseinheit für die Bestimmung von Position und Orientierung von Objekten im Raum, an denen Lichtpunkte und Reflektoren angeordnet sind, ist beispielsweise in der US 5,973,788 beschrieben.

Bei der Verwendung solcher Messgeräte können am Objekt, dessen Position und Orientierung zu bestimmen ist, in relativ zum Objekt bekannten Positionen z.B. mindestens drei von der Bilderfassungseinheit registrierbare Lichtpunkte und z.B. ein den Messstrahl des Lasertrackers reflektierender Reflektor angeordnet sein. Die von der Bilderfassungseinheit zu registrierenden Lichtpunkte können aktive Lichtquellen (z.B. Leuchtdioden) sein oder zu beleuchtende Reflektoren, wobei die Lichtpunkte zudem derart ausgestattet oder angeordnet sein können, dass sie eindeutig voneinander unterscheidbar sind. Alternativ ist auch bekannt (je nach erforderlicher Genauigkeit), die Position und Orientierung eines solchen, Lichtpunkte aufweisenden Messhilfsinstruments nur anhand von Kamerabildern und der Auswertung der Bild-Positionen der aufgenommenen Lichtpunkte in den Bildern zu bestimmen, d.h. ohne zusätzliche zu Hilfenahme einer (Laufzeit- oder Phasen-)Entfernungsmessung mit einer Lasereinheit, wie dies z.B. auch in den Veröffentlichungsschriften EP 2 008 120 B1 und EP 2 010 941 B1 beschrieben ist.

Im Allgemeinen ist eine maximal erreichbare Arbeitsgeschwindigkeit dieser Systeme - neben den strukturellen Merkmalen des Trackers oder der Kamera - im Wesentlichen auch bestimmt durch eine Prozessgeschwindigkeit der Bildanalyse. Die Durchführungsgeschwindigkeit der Bildanalyse und somit der Bestimmung der LichtpunktPositionen im Bild wird wesentlich durch die Effizienz der Bildverarbeitung und durch die in einem vorgegebenen Zeitintervall verarbeitbare Datenmenge begrenzt.

Die Geschwindigkeit der Bilddatenverarbeitung stellt somit einen Hauptflaschenhals dar, den Lasertracker mit Kamera des Standes der Technik aufweisen. Dabei werden die Bilddaten pixelweise ausgelesen und für jeden Pixel wird ein Helligkeits- bzw. Farbwert bestimmt. Jeder Pixel der einen vorbestimmten Schwellwert überschreitet wird dann bei der Berechnung jeweiliger Bildschwerpunkte zu den im Bild erfassten Lichtpunkten berücksichtigt. In herkömmlichen Systemen wird die Detektion der Lichtpunkte im Bild nach der Auslesung sämtlicher Pixel des Bildsensors (z.B. CMOS) oder zumindest sämtlicher Pixel, die zu einem abgebildeten Lichtfleck/-spot gehören, gestartet und beispielsweise ein jeweils erfasstes Kamerabild als Ganzes oder ein zusammenhängender Teil des Bildes als Ganzes verarbeitet. Ausserdem werden in diesen Systemen standardmässig sämtliche Pixel des Sensors hinsichtlich des jeweiligen Belichtungszustands geprüft. Zu jeder Ansammlung von Pixeln, deren Auslese-Signal über dem Schwellwert liegt und somit von einem identischen Licht-Spot des Messhilfsmittels beleuchtet sind, wird dann mathematisch ein Schwerpunkt ermittelt, wobei die Position des Schwerpunkts im Bild die Position des jeweiligen Lichtpunkts repräsentiert. Dadurch dass mit der Bestimmung der Schwerpunkte der Lichtpunkte im Normalfall erst nach Auslesung des gesamten Flächensensors begonnen wird und diese Auswertung verhältnismässig viel Rechenaufwand und somit auch viel Zeitaufwand bedarf, sind störende Latenzzeiten zwischen der Erfassung eines Bildes und dem Erhalt eines Ergebnisses durch die Auswertung des Bildes vorhanden, was auch eine maximal erreichbare Wiederholungs-Rate für das fortlaufende Aufnehmen von Bildern und das darauf basierende fortlaufende Bestimmen der Lage des Messhilfsinstruments sowie das Nachführen der Ausrichtung der Kamera betrifft. Dies kann also die Bestimmung und Verfolgung der Orientierung eines Tastwerkzeugs (als Messhilfsinstrument) stark beeinflussen, insbesondere hinsichtlich einer fortlaufenden Positions- und Orientierungsbestimmung. Als Folge können durch diese Verzögerung der Auswertung der räumlichen Lichtpunktanordnung z.B. Fehler bei der Bestimmung der exakten Lage eines Kontaktpunktes des Tastwerkzeugs auftreten.

Demnach ist es eine allgemeine Aufgabe der vorliegenden Erfindung eine Messvorrichtung und ein Messverfahren zur verbesserten, schnelleren und zuverlässigeren Bestimmung einer räumlichen Orientierung eines Messhilfsinstruments bereitzustellen.

Eine spezielle Aufgabe der vorliegenden Erfindung ist es im Rahmen einer Bilderfassung mit einem Flächensensor, eines Auslesens von Bildinformation aus dem Flächensensor und eines Bestimmens von Bild-Positionen von erfassten Markierungen des Messhilfsinstruments ein verbessertes und schnelleres Bildauswerteverfahren von mit dem Flächensensor erfassten Bildern bereitzustellen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Lagebestimmungsverfahren mithilfe eines Lasertrackers, zum fortlaufenden Bestimmen der räumlichen Lage eines mehrere Hilfspunkt-Markierungen in fixer bekannter räumlicher Verteilung relativ zueinander aufweisenden Messhilfsinstruments. Im Rahmen des Verfahrens erfolgt ein fortlaufendes Erfassen von Kamera-Bildern von der mindestens einen Hilfspunkt-Markierung mit einer Kamera mit einem eine Vielzahl von Pixeln aufweisenden Flächensensor und ein fortlaufendes Durchführen von Auslesedurchgängen, bei welchen zumindest einige der Pixel hinsichtlich eines jeweils aktuellen Belichtungswerts ausgelesen werden. Ferner wird mindestens eine Bild-Position für die mindestens eine abgebildete Hilfspunkt-Markierung im jeweils aktuellen Kamera-Bild abhängig von im Rahmen des jeweils aktuellen Auslesedurchgangs erhaltenen Belichtungswerten fortlaufend bestimmt und zudem die jeweils aktuelle räumliche Lage des Messhilfsinstruments basierend auf der mindestens einen aktuellen Bild-Position und insbesondere auf der fixen bekannten räumlichen Verteilung der Hilfspunkt-Markierungen relativ zueinander abgeleitet.

Erfindungsgemäss werden dabei nun fortlaufend diejeweils aktuellen Interessens-Bereiche auf dem Flächensensor abhängig von einer Sammlung von der - in mindestens einem vorgängig erfassten Kamera-Bild - bestimmten Bild-Positionen gesetzt. Der mindestens eine Interessens-Bereich definiert dabei jeweils eine abgegrenzte Untermenge von zusammenhängenden benachbarten Pixeln aus der Gesamtheit der Pixel des Flächensensors. Das Bestimmen der aktuellen Bild-Positionen erfolgt nun unter Berücksichtigung von ausschliesslich maximal jenen aktuellen Belichtungswerten, die von innerhalb von den aktuell gesetzten Interessens-Bereichen liegenden Pixeln des Flächensensors erhalten sind.

Beispielsweise können als Hilfspunkt-Markierungen Lichtpunkte (d.h. selbst Licht etwa im spektralen oder infraroten Bereich emittierende Punkte), reflektierende (insbesondere retro-reflektierende) Objekte wie Reflexfolienpunkte oder kleine Katzenaugen, oder auch nur vordefinierte Muster, die am Messhilfsinstrument angeordnet sind, infrage kommen. Wie dem Fachmann an sich bekannt müssen dabei die Hilfspunkt-Markierungen im Prinzip also derart ausgebildet sein, dass diese in einem aufgenommenen Bild durch Bildverarbeitung zuverlässig identifiziert und hinsichtlich einer Position im Bild eindeutig ausgewertet werden können.

Als Bild-Position wird im Zusammenhang mit der vorliegenden Erfindung folglich allgemein eine Position in einem aufgenommenen Bild, an welcher die entsprechende Hilfspunkt-Markierung abgebildet ist, verstanden. Die Bild-Position repräsentiert somit also die Position einer im Bild erfassten und erkannten Hilfspunkt-Markierung.

Der Interessens-Bereich stellt eine Region auf dem Sensor dar, innerhalb derer die darin beim Bilderfassen belichteten Pixel zur Auswertung und Bestimmung der jeweiligen Bild-Positionen berücksichtigt werden. D.h., erfindungsgemäss werden nur innerhalb diesen relevanten Regionen dort abgebildete Hilfspunkt-Markierungen berücksichtigt. Die Position, Form und Grösse eines jeweiligen Interessens-Bereichs können jeweils individuell an die Messbedingungen, z.B. an die Position, Form und Grösse der darin erwartungsgemäss zu erfassenden Hilfspunkt-Markierung, angepasst werden.

Insbesondere betrifft die Erfindung ein entsprechendes Lagebestimmungsverfahren zum fortlaufenden Bestimmen eines Messhilfsinstrument, das mehrere Hilfspunkt-Markierungen in fixer bekannter räumlicher Verteilung relativ zueinander aufweist, wobei folglich bei dem fortlaufenden Erfassen jeweils die mehreren Hilfspunkt-Markierungen abgebildet werden und dann mehrere Bild-Positionen (also jeweils eine für jede Hilfspunkt-Markierung) im Kamera-Bild bestimmt werden. Die räumliche Lage des Messhilfsinstruments wird dann basierend auf den jeweiligen bestimmten aktuellen Bild-Positionen und auf der fixen bekannten räumlichen Verteilung der Hilfspunkt-Markierungen relativ zueinander abgeleitet. Erfindungsgemäss werden dabei fortlaufend jeweils aktuelle Interessens-Bereiche auf dem Flächensensor abhängig von einer Sammlung von in mindestens einem vorgängig erfassten Kamera-Bild bestimmten Bild-Positionen gesetzt.

Bei der Detektion von mehreren Hilfspunkt-Markierungen können Interessens-Bereiche derart gebildet und gesetzt werden, dass ein Interessens-Bereich für mehrere dort abzubildende Hilfspunkt-Markierungen gesetzt werden oder dass jeweils für eine Hilfspunkt-Markierung jeweils ein Interessens-Bereich gesetzt wird.

Derartige Verfahren können insbesondere in der industriellen Vermessung Anwendung finden. Zum Bestimmen der räumlichen Lage eines Messhilfsinstruments werden demnach Bilder mit einem Flächensensor einer Kamera fortlaufend erfasst und entsprechend die Pixel des Flächensensors ausgelesen. Die räumliche Lage des Messhilfsinstruments kann im Zusammenhang mit der vorliegenden Erfindung zum einen repräsentiert werden durch die Position des Messhilfsinstruments im Raum und zum anderen insbesondere durch die Berücksichtigung der räumlichen Orientierung bzw. Ausrichtung des Instruments. Das Auslesen der Pixel kann sequenziell und zeilenweise erfolgen (z.B. also Pixel für Pixel innerhalb einer Zeile und dies sequenziell Zeile für Zeile), wobei die Pixel jeweils hinsichtlich ihres aktuellen Belichtungszustandes analysiert werden. Dabei kann die im Bild abgebildete Hilfspunkt-Markierung, insbesondere die mehreren Hilfspunkt-Markierungen, auf dem Sensor durch ihren Belichtungszustand erkannt und somit eine Bild-Position zu jeder Hilfspunkt-Markierung bestimmt werden. Aus dieser Information kann, z.B. unter Berücksichtigen einer bekannten relativen Anordnung und Lage der Hilfspunkt-Markierungen auf dem Messhilfsinstrument, die aktuelle räumliche Lage des Messhilfsinstruments abgeleitet werden. Erfindungsgemäss wird auf dem Flächensensor mindestens ein Interessens-Bereich, insbesondere mehrere Interessens-Bereiche, mit einer bestimmten Anzahl zusammenhängender Pixel definiert, wobei das Bestimmen der Position einer Markierungen im Bild (Bild-Position) maximal anhand derjenigen Pixel erfolgt, die innerhalb des Interessens-Bereichs liegen. Die Setzung der jeweiligen Lage des Interessens-Bereichs auf dem Sensor wird mindestens anhand der Bild-Positionen vorgenommen, die in mindestens einem vorher aufgenommenen Bild ermittelt wurden, d.h. also durch Heranziehung von bereits vorhandener (und gespeicherter) Informationen über die (kurze Zeit zuvor eingenommene) Lage des Messhilfsinstruments.

Das fortlaufende Erfassen von Bildern mit der Kamera ist dabei so zu verstehen, dass Bilder mit einer derartigen Frequenz erfasst und insbesondere ausgewertet werden, dass - etwa auch abhängig von einer erwarteten Dynamik des Messhilfsinstruments - ein fortlaufendes Tracking des Messhilfsinstruments (bzw. der Hilfspunkt-Markierungen) mittels der Bildanalyse erfolgen kann. Dabei wird die Frequenz so gewählt, dass auch schon kleine Positions- und/oder Orientierungsänderungen des - meist sich dynamisch bewegenden - Messhilfsinstruments, die z.B. durch einen das Messhilfsinstrument führenden Benutzer oder einen Roboterarm bewirkt werden, zuverlässig erfasst und eine dadurch verursachte Lageänderung des Instruments präzise bestimmbar ist. Hierfür können beispielsweise Bilder erfasst werden und jeweilige Lagebestimmungen erfolgen mit Raten von z.B. mindestens 1Hz, insbesondere 10-100Hz, oder auch höher als 100Hz.

Ein Vorteil dieses Lagebestimmungsverfahren liegt darin, dass ein Anteil der Sensorpixel für eine Auswertung und Bestimmung der Positionen der abgebildeten Marierungen nicht berücksichtigt werden und somit die erreichbare Auswertegeschwindigkeit - aufgrund einer reduzierten zu verarbeitenden Datenmenge - steigt. Je nach Definition der Grösse der Bereiche, die für die Auswertung nicht berücksichtigt werden müssen, kann dieser Anteil im Vergleich zu den Interessens-Bereichen erheblich grösser sein und die Datenreduktion somit deutlich ausfallen.

Insbesondere kann dies erfindungsgemäss dadurch bewirkt werden, dass bereits die jeweiligen aktuellen Auslesedurchgänge derart durchgeführt werden, dass jeweils nur genau die innerhalb der jeweils aktuellen Interessens-Bereiche liegenden Pixel ausgelesen werden.

Der Gesamtprozess wird dabei dann bereits dadurch verkürzt, dass schon die Auslesedurchgänge mit reduziertem Zeitaufwand ablaufen und die dabei erzeugten Datenmengen - verglichen mit einer Auslesung aller Pixel des Sensors - von Beginn an geringer ausfallen.

Die Wiederholrate für die fortlaufende Durchführung des gesamten Verfahrens kann dadurch also gesteigert werden (insbesondere dabei die Wiederholrate für die Durchführung der jeweiligen Auslesedurchgänge und somit letztlich auch die Wiederholrate für das Ermitteln der Lage des Messhilfsmittels). Mit Erhöhung der Wiederholrate kann - als Nebeneffekt - die Unsicherheit beim Setzen der Interessens-Bereiche auch deutlich gesenkt werden, sodass eine Neudefinition des mindestens einen Interessens-Bereichs schneller erfolgt und somit bei Bewegung des Messhilfeinstruments das Setzen des Interessens-Bereichs an die jeweilige Positionsänderung der Hilfspunkt-Markierung schneller (bzw. an kurzer zurückliegende bekannte Lagezustände) angepasst werden kann. Mit anderen Worten kann also schon die Unsicherheit beim Setzen der Interessens-Bereiche reduziert werden und somit können z.B. bei hohen Wiederholraten die Interessens-Bereiche mit geringerer Grösse und somit mit einem reduzierten zu verarbeitenden Datenaufkommen gesetzt werden. Durch die geringere Menge der zu verarbeitenden Daten kann die Wiederholrate wiederum weiter gesteigert (rekursives Verfahren).

Gemäss der Erfindung können dabei für das Setzen der Interessens-Bereiche Erwartungswerte für die aktuellen Bild-Positionen ermittelt werden, die etwa aus einer Sammlung von in mehreren vorgängig (insbesondere vorgängig aufeinanderfolgend) erfassten Kamera-Bildern bestimmten Bild-Positionen abgeleitet werden. Insbesondere können die jeweils in mehreren vorgängig erfassten Kamera-Bildern bestimmten Bild-Positionen dabei zur Fütterung eines Kalman-Filters dienen, mithilfe dessen dann die Erwartungswerte für die aktuellen (nächsten) Bild-Positionen der Hilfspunkt-Markierungen ermittelt werden. Durch ein derartiges Heranziehen vorangehend aufgenommener Bilder und durch die Auswertung der Bilder hinsichtlich der Bild-Positionen kann z.B. aus einer Bildabfolge für eine erfasste Markierung eine Bewegung der Markierung im Bild berechnet werden und somit für ein aktuell aufzunehmendes Bild eine aktuelle Position der Markierung antizipiert (bzw. prädiktiert) werden. Eine derartige Abschätzung der zu erwartenden aktuellen Position im Bild kann - wie zuvor erwähnt - vorteilhaft mittels eines Kalman-Filters erfolgen. Diesem Filter wird eine Vielzahl an Bildinformation, z.B. Lage, Anzahl und Grösse der erfassten Markierungen, zugeführt und mit einem mathematischen Modell eine Berechnung eines Erwartungswerts für die Bild-Position durchgeführt. So können die Interessens-Bereiche auf dem Sensor genau derart gesetzt werden, dass alle auf dem Sensor abgebildeten Hilfspunkt-Markierungen erwartungsgemäss in den Interessens-Bereichen liegen, bzw. (andersherum ausgedrückt) können die jeweiligen Interessens-Bereiche z.B. zentrisch jeweils um die ermittlungsgemäss aktuell zu erwartenden Bild-Positionen gelegt bzw. gesetzt werden.

Die Erfindung betrifft ausserdem einen Lasertracker zur fortlaufenden Bestimmung der räumlichen Lage eines mehrere Hilfspunkt-Markierungen in fixer bekannter räumlicher Verteilung relativ zueinander aufweisenden Messhilfsinstruments. Das Messgerät weist eine Kamera zur fortlaufenden Erfassung von Kamera-Bildern von den Hilfspunkt-Markierungen, mit einem eine Vielzahl von Pixeln aufweisenden Flächensensor, und eine Auswerte- und Steuereinheit auf. Die Auswerte- und Steuereinheit ist dabei ausgebildet zur Steuerung von fortlaufend durchführbaren Auslesedurchgängen, bei welchen zumindest einige der Pixel hinsichtlich eines jeweils aktuellen Belichtungswerts ausgelesen werden, zur fortlaufenden Bestimmung von Bild-Positionen für die abgebildeten Hilfspunkt-Markierungen im jeweils aktuellen Kamera-Bild abhängig von im Rahmen des jeweils aktuellen Auslesedurchgangs erhaltenen Belichtungswerten und zur fortlaufenden Ableitung der jeweils aktuellen räumlichen Lage des Messhilfsinstruments basierend auf den aktuellen Bild-Positionen und auf der fixen bekannten räumlichen Verteilung der Hilfspunkt-Markierungen relativ zueinander.

Ferner ist die Auswerte- und Steuereinheit ausgebildet zur fortlaufenden Setzung von mindestens einem aktuellen Interessens-Bereich auf dem Flächensensor abhängig von einer Sammlung von der in mindestens einem vorgängig erfassten Kamera-Bild bestimmten mindestens einen Bild-Position, wobei der mindestens eine Interessens-Bereich jeweils eine abgegrenzte Untermenge von zusammenhängenden benachbarten Pixeln aus der Gesamtheit der Pixel des Flächensensors definiert. Zudem ist die Auswerte- und Steuereinheit zur Berücksichtigung von ausschliesslich maximal solchen aktuellen Belichtungswerten für die Bestimmung der jeweils mindestens einen aktuellen Bild-Position ausgebildet, die von innerhalb von dem mindestens einen aktuell gesetzten Interessens-Bereich liegenden Pixeln des Flächensensors erhalten sind

Mit einem derartigen erfindungsgemässen Messgerät kann die räumliche Lage, insbesondere eine Positionsinformation (z.B. der Raumwinkel zur Hilfspunkt-Markierung bzw. zum Messhilfsinstrument) und/oder Orientierung, des Messhilfsinstruments, z.B. eines Tastwerkzeugs mit einem Kontaktsensor, sehr schnell ermittelt werden. Solche Messgeräte werden mit korrespondierenden Messhilfsinstrumenten insbesondere in der industriellen Vermessung zur Vermessung von Bauteilen oder zur Qualitätskontrolle in Fertigungsprozessen, z.B. zwischen einzelnen Fertigungsschritten, eingesetzt. Hierfür können mittels der Auswerte- und Steuereinheit Interessens-Bereiche auf dem Flächensensor in Abhängigkeit vorher erfasster Bildinformation so definiert werden, dass eine Anzahl der Pixel innerhalb der Interessens-Bereiche zur Bestimmung einer Bild-Position der Hilfspunkt-Markierungen herangezogen werden. Damit kann die Bestimmung der Bild-Positionen anhand nur der so in den definierten Interessens-Bereichen liegenden Pixeln vorgenommen werden und ein Teil der Sensordaten muss nicht berücksichtigt werden. Dies führt zu einer Reduktion der zu verarbeitenden Daten und damit zu einer schnelleren Datenauswertung und Positionsbestimmung. Die Orientierung des Messhilfsinstrument kann dann mittels der bestimmten Positionen mehrerer Hilfspunkt-Markierungen, insbesondere von mindestens drei, insbesondere von fünf bis acht Markierungen, im Bild - unter Berücksichtigung der fixen bekannten räumlichen Verteilung der Hilfspunkt-Markierungen am Messhilfsinstrument - abgeleitet werden.

Insbesondere kann die Auswerte- und Steuereinheit erfindungsgemäss zur Steuerung der Auslesedurchgänge derart ausgebildet sein, dass jeweils genau nur die innerhalb der jeweils aktuellen Interessens-Bereiche liegenden Pixel ausgelesen werden. Durch die alternative Berücksichtigung aller Pixel innerhalb der Interessens-Bereiche kann beispielsweise eine Genauigkeit hinsichtlich der Bestimmung der Bild-Positionen erreicht werden.

Ausserdem können erfindungsgemäss für die Setzung der Interessens-Bereiche durch die Auswerte- und Steuereinheit aus einer Sammlung von in mehreren vorgängig aufeinanderfolgend erfassten Kamera-Bildern bestimmten Bild-Positionen jeweils Erwartungswerte für die aktuellen Bild-Positionen ermittelbar sein, insbesondere anhand eines Kalman-Filters. Dabei kann z.B. aus einer Bildansammlung eine Lageänderung einer Bild-Position verfolgt und aus dem Verlauf dieser Lageänderung eine aktuell zu erwartende Position abgeleitet und ein Interessens-Bereich auf dem Flächensensor so definiert werden, dass die zu erfassende Markierung in diesem Bereich abgebildet wird. Eine derartige modellhafte Berechnung kann beispielsweise mittels eines Kalman-Filters erfolgen.

Weiters kann das Messgerät erfindungsgemäss eine Basis, Verstellmittel zur motorisierten Änderung einer Ausrichtung der Kamera gegenüber der Basis und Winkelmessmittel zur fortlaufenden Erfassung der jeweils aktuellen Ausrichtung der Kamera aufweisen. Die Auswerte- und Steuereinheit kann zur fortlaufenden Steuerung der Änderung der Ausrichtung der Kamera derart ausgebildet sein, dass diese fortlaufend auf das Messhilfsinstrument ausgerichtet ist. Mit dieser Ausbildung des Messgeräts kann somit fortlaufend ein Bild in Richtung des Messhilfsinstruments erfasst und die Bestimmung der mindestens einen Bild-Position und folgend die Bestimmung der räumlichen Lage des Messhilfsinstrument erfolgen. Hierfür kann zur Ausrichtung beispielsweise ein Informationsaustausch mit einem Lasertracker, der den Reflektor am Messhilfsinstrument anzielt, verfolgt und dessen Position im Raum bestimmt, erfolgen und die Ausrichtung der Kamera in Abhängigkeit der Trackerausrichtung eingestellt werden.

Ferner kann die Kamera erfindungsgemäss ein Objektiv mit variabler Brennweite aufweisen, wobei die Brennweite (und damit der Abbildungsmassstab der Kamera) derart automatisch gesteuert durch die Auswerte- und Steuereinheit fortlaufend veränderbar ist, dass das Messhilfsinstrument entfernungsunabhängig im Wesentlichen mit konstantem Ausmass auf dem Flächensensor abgebildet wird. Zur Einstellung der Brennweite kann wiederum eine mit einem Lasertracker ermittelte Distanz zwischen Tracker bzw. Kamera (falls die Kamera am Tracker angeordnet ist oder eine bekannte relative Position zu diesem aufweist) herangezogen und ein Vergrösserungsfaktor so eingestellt werden, dass das Messhilfsinstrument auf dem Flächensensor ein vordefiniertes Ausmass annimmt. Die Brennweite kann dabei beispielsweise mittels eines Motors automatisiert einstellbar sein. Insbesondere kann die Kamera dabei ein Panfokal- oder Vario-Objektiv aufweisen, wobei im Falle der Ausbildung als Vario-Objektiv dann eine Zoom-Optik-Gruppe abgestimmt auf eine Fokus-Optik-Gruppe verschoben werden kann und somit also zeitlich parallel die Brennweite und entsprechend die Fokussierung angepasst werden können.

Das Messgerät ist erfindungsgemäss als Lasertracker ausgebildet und weist ferner mindestens eine in Richtung einer Zielachse messende optische Distanzmessvorrichtung zur Messung von Distanzen zu einem am Messhilfsinstrument vorgesehenen Retro-Reflektor auf. Zudem kann das Messgerät über Verstellmittel zur motorisierten Änderung einer Ausrichtung der Zielachse gegenüber der Basis, über Winkelmessmittel zur fortlaufenden Erfassung der jeweils aktuellen Ausrichtung der Zielachse und über einen Mess- und Regelkreis zur Verfolgung des Retro-Reflektors des Messhilfsinstruments mit der Zielachse, sodass diese fortlaufend auf den Retro-Reflektor ausgerichtet ist, verfügen.

Ein Retro-Reflektor im Sinne der vorliegenden Erfindung kann dabei verkörpert werden z.B. durch ein Prisma oder eine reflektierende Folie, wobei Strahlung, die auf das Prisma oder die Folie auftrifft, in paralleler bzw. koaxialer Richtung zurück reflektiert wird.

Ein weiterer, zweiter Aspekt, welcher sowohl separat als auch abhängig von der oben beschriebenen Erfindung betrachtet werden kann, betrifft ein Lagebestimmungsverfahren nach demselben Oberbegriff, insbesondere mithilfe eines Lasertrackers, zum fortlaufenden Bestimmen der räumlichen Lage eines mindestens eine Hilfspunkt-Markierung aufweisenden Messhilfsinstruments, insbesondere wobei das Messhilfsinstruments mehrere Hilfspunkt-Markierungen in fixer bekannter räumlicher Verteilung relativ zueinander aufweist. Im Rahmen des Lagebestimmungsverfahrens erfolgen ein fortlaufendes Erfassen von Kamera-Bildern von der mindestens einen Hilfspunkt-Markierung mit einer Kamera mit einem eine Vielzahl von Pixeln aufweisenden Flächensensor und ein fortlaufendes Durchführen von Auslesedurchgängen, bei welchen zumindest einige der Pixel hinsichtlich eines jeweils aktuellen Belichtungswerts ausgelesen werden. Zudem wird ein fortlaufendes Bestimmen von mindestens einer Bild-Position für die mindestens eine abgebildete Hilfspunkt-Markierung im jeweils aktuellen Kamera-Bild abhängig von im Rahmen des jeweils aktuellen Auslesedurchgangs erhaltenen Belichtungswerten und ein fortlaufendes Ableiten der jeweils aktuellen räumlichen Lage des Messhilfsinstruments basierend auf der mindestens einen aktuellen Bild-Position und insbesondere auf der fixen bekannten räumlichen Verteilung der Hilfspunkt-Markierungen relativ zueinander durchgeführt.

Weiters erfolgt - gemäss dem zweiten Aspekt - nun das Bestimmen der mindestens einen Bild-Position durch die folgenden Schritte:
- Filtern von Pixeln, für die der beim Auslesen erhaltene Belichtungswert ein Schwellwertkriterium erfüllt, insbesondere oberhalb eines Schwellwerts liegt,
- Zusammenfügen von jeweils in einer Zeile des Flächensensors kohärente Zeilenbereiche bildenden gefilterten Pixeln zu Pixel-Scheiben,
- Ermitteln von jeweiligen Schwerpunktanteilen (Teil-Schwerpunkten) für jede der Pixel-Scheiben,
- Gruppieren der Pixel-Scheiben derart, dass jeweils solche Pixel-Scheiben einander zugeordnet sind, die zu der mindestens einen abgebildeten Hilfspunkt-Markierungen gehören, und
- Ableiten der mindestens einen Bild-Position der mindestens einen Hilfspunkt-Markierung anhand von den entsprechenden jeweiligen Schwerpunktanteilen der jeweils einander zugeordneten Pixel-Scheiben.

Gemäss dem zweiten Aspekt, kann im Rahmen der Auslesedurchgänge der Flächensensor Pixel für Pixel und Zeile für Zeile mit einer vorgegebenen Pixelauslese-Rate ausgelesen werden und spätestens unmittelbar nach Komplettierung des Auslesens von jeweils einer Zeile bereits für diese eine Zeile die im Rahmen des Bestimmens der mindestens einen Bild-Position, insbesondere von mehreren Bild-Positionen, erfolgenden Schritte des Filterns, des Zusammenfügens und des Ermittelns von jeweiligen Schwerpunkten gestartet und durchgeführt werden.

Gemäss dem zweiten Aspekt können weiters die Schritte des Filterns, des Zusammenfügens zu Pixel-Scheiben und des Ermittelns der Schwerpunktanteile (Teil-Schwerpunkte) mit einer ersten, vergleichsweise hohen Rate getaktet sein, die im Speziellen der Pixelauslese-Rate entspricht, und die Schritte des Gruppierens und des Bestimmens der Bild-Positionen mit einer zweiten, vergleichsweise niedrigen Rate getaktet sein.

Durch ein derartiges Vorgehen können - mit anderen Worten - also diejenigen Pixel, die das Beleuchtungs-Kriterium erfüllen und kohärente Zeilenbereiche bilden, z.B. in einer Zeile nebeneinander liegen, wobei Lücken zwischen den Pixeln verursacht durch einzelne Pixel-Fehlstellen in den kohärenten Zeilenbereichen vorliegen können, dann sofort zu Pixel-Scheiben bzw. Zeilenstücken zusammengefügt werden (insbesondere schon vor oder während die Auslesung der nächsten Zeile des Sensors erfolgt), wobei zu jedem Zeilenstück ein Schwerpunktanteil berechnet wird. Die so bestimmten Scheiben und Schwerpunktanteile werden anschliessend so gruppiert, dass diejenigen Pixel-Scheiben, die zu einer Hilfspunkt-Markierung gehören, eine Gruppe bilden. Aus dieser Gruppe kann dann eine Position der Hilfspunkt-Markierung im Bild, beispielsweise durch Berechnen eines Gesamtschwerpunkts zu den Pixel-Scheiben, abgeleitet werden.

Gemäss dem zweiten Aspekt, ist ein Vorteil dieses Verfahrens, dass ein früher Auswerteschritt - nämlich das Bestimmen der Pixel-Scheiben und das Berechnen der Schwerpunktanteile zu den jeweiligen Pixel-Scheiben - unabhängig von der gesamten zu einer Hilfspunkt-Markierung gehörender Bildinformation erfolgen kann. Damit müssen nicht all die Zeilen bereits ausgelesen sein, die eine entsprechende Bildinformation einer Hilfspunkt-Markierung enthalten, um mit einer Teil-Auswertung und Bestimmung von später weiterverwendbaren Teil-Informationen für das letztendliche End-Bestimmen der Bild-Position beginnen zu können. D.h., dass die Auswertung schon zur Erzeugung von Teil-Informationen hinsichtlich der Bild-Positionen der Hilfspunkt-Markierung beginnen kann und damit eine reduzierte Datenmenge zur Weiterverarbeitung im Rahmen einer End-Auswertung übergeben werden kann. Dieses Bestimmen der Zeilenstücke und der Schwerpunktanteile kann sehr schnell (mit relativ geringem Rechenaufwand) erfolgen. Da die später dann noch zu verarbeitende Datenmenge nach der Übergabe wesentlich reduziert ist, kann dann das Gruppieren und das endgültige Bestimmen einer Bild-Position einer Hilfspunkt-Markierung - unter Nutzung der durch die Teilauswertung bereits vorliegenden Teil-Informationen - rasch und unter vergleichsweise geringem noch zu erledigendem Rest-Rechenaufwand sofort nach Komplettierung der Auslesung der weiteren Zeilen, auf welchen die Hilfspunkt-Markierung abgebildet sind, erfolgen.

Das Ergebnis der Bestimmung einer Bild-Position von einer auf dem Sensor abgebildeten Hilfspunkt-Markierung kann - gemäss dem zweiten Aspekt - also schneller nach Komplettierung der Auslesung der letzten (untersten) Zeile, auf welcher noch mindestens ein Pixel durch diese Hilfspunkt-Markierung beleuchtet wird, vorliegen, da wesentliche Teile des Rechenaufwands, der für die Bestimmung dieser Bild-Position erforderlich ist, bereits während des zeilenweise erfolgenden Auslesens jener Zeilen, die durch den entsprechenden Hilfspunkt-Markierungs-Spot erfasst sind, erledigt werden kann.

Weitere Ausführungsformen des erfindungsgemässen Messgeräts sind in den abhängigen Ansprüchen bzw. oben bereits als Weiterbildungen des erfindungsgemässen Lagebestimmungsverfahrens analog beschrieben, insbesondere wobei einzelne Schritte des Lagebestimmungsverfahrens automatisch durch ein entsprechend vorprogrammiertes FPGA oder ASIC gemäss des erfindungsgemässen Messgeräts ausgeführt werden können.

FPGAs (Field Programmable Gate Array) und ASICs (Application-Specific Integrated Circuit) sind als integrierte Schaltkreise ausgebildete, vorprogrammierbare elektronische Bauteile. Wie dem Fachmann an sich bekannt können durch deren spezifische Programmierung Prozesse, wie beispielsweise die oben beschriebene Bestimmung von Bild-Positionen, schnell und effizient ausgeführt werden.

Die Erfindung betrifft zudem ein Messsystem aus einem erfindungsgemässen Messgerät und einem mehrere Hilfspunkt-Markierungen, insbesondere Lichtpunkte, in fixer bekannter räumlicher Verteilung relativ zueinander aufweisenden Messhilfsinstrument insbesondere wobei das Messhilfsinstrument zusätzlich zu den Hilfspunkt-Markierungen einen Retro-Reflektor aufweist.

Ein weiterer Gegenstand der Erfindung ist ein Computerprogrammprodukt mit Programmcode, der auf einem maschinenlesbaren Träger gespeichert ist, zur Steuerung bzw. Durchführung des erfindungsgemässen Lagebestimmungsverfahrens.

Die erfindungsgemässen Verfahren bzw. die Computerprogrammprodukte können insbesondere in der industriellen Vermessung (d.h. für Laser-Tracker, die gattungsgemäss zum Tracken eines Messhilfsinstruments mit mehreren Lichtpunkten und einem Retro-Reflektor [der ebenso eine Hilfspunkt-Markierung im Sinne der vorliegenden Erfindung darstellt] ausgebildet sind) Anwendung finden. Die erfindungsgemässen Verfahren können dann in einem solchen Laser-Tracker sowohl hinsichtlich des Flächensensors einer - im Stand der Technik meist als 6dof-Kamera bezeichneten - Kamera (d.h. einer speziell für die Erfassung der mehreren Lichtpunkte des Messhilfsinstruments ausgebildeten Kamera - welche letztendlich zur hochpräzisen Bestimmung der aktuellen Orientierung des Messhilfsinstruments dient) als auch - alternativ oder zusätzlich - hinsichtlich eines - im Stand der Technik oft als Tracking-Sensor oder ATR-Sensor bezeichneten - Flächensensors (speziell für die Erfassung einer Ablage des zurückreflektierten Laserstrahls von einer Mittel-Position auf dem Sensor) jeweils für die Steuerung der Auslesedurchgänge und die Auswertung der mit den jeweiligen Flächensensoren beider Arten erfassten Bilder angewendet werden.

Als Alternative zum klassischen Verfolgen (ATR), wobei ein retroreflektierender Punkt am Messhilfsinstrument mit z.B. infraroten Laserstrahlen beleuchtetet wird und die Lage eines zurückgeworfenen Reflexes im anhand eines - insbesondere nur - im entsprechenden Wellenlängenbereich sensitiven flächenhaften Detektors aufgenommenen Bilds bestimmt wird, oder zur klassischen Verwendung von am Messhilfsinstrument vorgesehenen Lichtpunkten zur 6dof-Bestimmung können auch ein oder mehrere prägnante Muster (z.B. Farbpunkte) als Hilfspunkt-Markierungen dienen und eine im sichtbaren Spektralbereich arbeitende digitale Kamera vorgesehen sein, mit der Kamerabilder aufgenommen und daraufhin Bild-Positionen von den im Bild als Hilfspunkt-Markierungen erkannten Mustern bestimmt werden und dies als Grundlage für die Lage-Bestimmung des Messhilfsinstruments dienen (wie dies etwa analog in der europäischen Patentanmeldung mit der Anmeldenummer EP 10168771.3 beschrieben ist). Die erfindungsgemässen Aspekte für das Steuern der fortlaufenden Auslesevorgänge des Flächensensors bzw. der fortlaufenden Auswertung der dabei erfassten Bilder können auch für den Fall, dass prägnante Muster am Messhilfsinstrument als Hilfspunkt-Markierungen und eine im sichtbaren Spektralbereich arbeitende digitale Kamera mit einem Flächensensor verwendet werden, Anwendung finden.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein erfindungsgemässes Messsystem mit einem Lasertracker, einer Bilderfassungseinheit und einem Messhilfsinstrument;
- Fig. 2: einen Bilderfassungssensor für ein erfindungsgemässes Bildanalyseverfahren;
- Fig. 3: eine erste Ausführung einer erfindungsgemässen Bildauswertung zur Lokalisation von Lichtpunkten im Bild;
- Fig. 4a-c: eine zweite Ausführung einer erfindungsgemässen Bildauswertung zur Lokalisation von Lichtpunkten im Bild;
- Fig. 5: ein Blockdiagramm für einen Ablauf der erfindungsgemässen Bilderfassung und -auswertung nach der ersten und/oder zweiten Ausführung;
- Fig. 6a-c: eine weitere Ausführung einer erfindungsgemässen Bildauswertung zur Lokalisation von Lichtpunkten im Bild;
- Fig. 7: ein weiteres Blockdiagramm für einen Ablauf einer weiteren erfindungsgemässen Bilderfassung und Bildauswertung;
- Fig. 8a-b: weitere Blockdiagramme für den Ablauf einer Bildauswertung von der Bilderfassung bis zur Weiterarbeitung der ausgewerteten Bildinformation nach dem Stand der Technik;
- Fig. 9a-b: zwei weitere Blockdiagramme für den Ablauf einer erfindungsgemässen Bildauswertung;
- Fig. 10a-b: zwei weitere Blockdiagramme für den Ablauf einer weiteren erfindungsgemässen Bildauswertung.

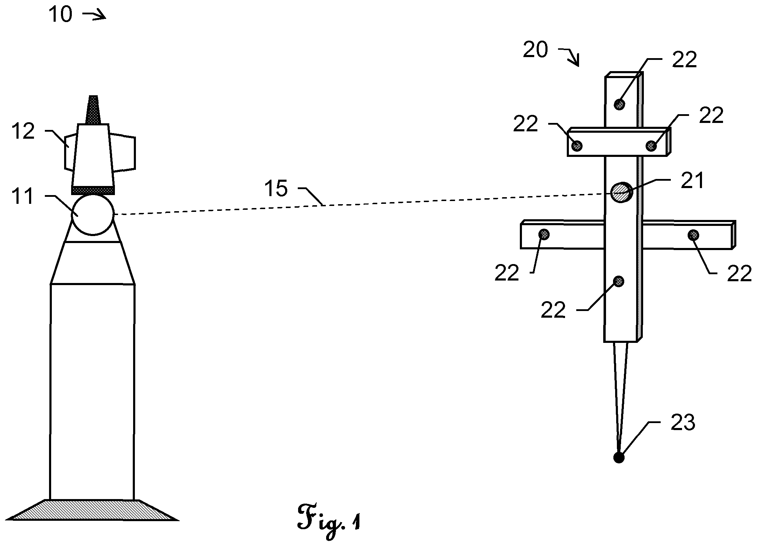

Figur 1 zeigt ein erfindungsgemässes Messsystem 10 mit einem Lasertracker 11, einer Bilderfassungseinheit 12 und einem Messhilfsinstrument 20, z.B. einem Tastwerkzeug. Die Bilderfassungseinheit 12 kann zum Zweck einer Positionsbestimmung einer Sensorbelichtung auf dem Sensor bzw. in einem erfassten Bild einen CMOS aufweisen oder insbesondere als CCD- oder Pixelsensorarray-Kamera ausgebildet sein. Derartige Sensoren erlauben eine positionssensitive Detektion von erfassten Belichtung auf. Weiters weist das Messhilfsinstrument 20 einen Sensor auf, dessen Kontaktpunkt 23 mit einem zu vermessenden Zielobjekt in Kontakt gebracht werden kann. Während dieser Kontakt zwischen dem Tastwerkzeug 20 und dem Zielobjekt besteht können eine Position des Kontaktpunktes 23 im Raum und damit die Koordinaten eines Punkts am Zielobjekt exakt bestimmt werden. Dieses Bestimmen erfolgt vermittels einer definierten relativen Positionierung des Kontaktpunkts 23 zum Reflektor 21 und zu den am Messhilfsinstrument 20 angeordneten Markierungen 22, die beispielsweise als Leuchtdioden ausgebildet sein können. Alternativ können die Markierungen 22 auch derart ausgebildet sein, dass diese bei einem Beleuchten, z.B. mit Strahlung einer definierten Wellenlänge, die auftreffende Strahlung reflektieren (als Retro-Reflektoren ausgebildete Hilfspunkt-Markierungen 22), insbesondere eine bestimmte Leuchtcharakteristik zeigen, oder das diese ein definiertes Muster oder Farbkodierung aufweisen. Dafür müssen zum einen die Position des Reflektors 21 bzw. die Position des Tastwerkzeugs 20 und zum anderen dessen räumliche Orientierung bekannt sein.

Zur Bestimmung der Position wird ein Laserstrahl 15 in Richtung eines auf dem Messhilfsinstrument 20 angeordneten Reflektors 21 vom Lasertracker 11 emittiert, von dort zum Tracker 11 parallel zurück reflektiert und mittels einer Empfangseinheit am Tracker 11 erfasst. Der Lasertracker 11 verfügt zudem über eine Distanzmesseinheit zur Bestimmung einer Entfernung zwischen dem Tracker 11 und dem Reflektor 21 und über Winkelmesser, die eine Stellung eines Ablenkspiegels, mittels dessen der Laserstrahl 15 definiert ausgerichtet und geführt werden kann, und somit eine Ausbreitungsrichtung des Laserstrahls 15 bestimmbar machen. Die Ausrichtung des Laserstrahls 15 kann insbesondere durch ein Schwenken einer Anzieleinheit, in der eine strahlführende Optik und insbesondere eine Strahlquelle verbaut sein können, erfolgen. Durch diese beschriebene Anordnung können somit sowohl die Distanz als auch die Richtung zum Reflektor 21 bzw. zum Tastwerkzeug 20 präzise ermittelt werden.

Die Orientierung des Messhilfsinstruments 20 im Raum wird mittels der definierten, relativen Lage und Anordnung der vorgesehenen Leuchtdioden 22 bestimmt. Hierzu wird von der Kamera 12 ein Bild des Messhilfsinstruments 20 mit den Leuchtdioden 22 erfasst und durch eine Bildverarbeitungseinheit erfindungsgemäss analysiert. Insbesondere kann das Erfassen des Bildes wellenlängenselektiv derart erfolgen, dass die Wellenlänge des von den Leuchtdioden 22 emittierten Lichts von einem Sensor der Kamera detektiert wird bzw. mittels eines der Kamera 12 zugeordneten Filters auf den Sensor transmittiert wird. Gemäss dem zweiten Aspekt, erfolgt die Bildanalyse nun z.B. durch zeilenweises Auslesen des Sensors, wobei in jeder Zeile diejenigen Pixel als relevante Pixel identifiziert werden, deren Leuchteigenschaften über einem bestimmten Schwellwert liegen. Nach der Detektion dieser relevanten Pixel in einer Zeile wird zu jeder Pixelansammlung ein Zeilenstück (Slice) mit einem jeweiligen Schwerpunktanteil ermittelt und anschliessend die nächste Sensorzeile untersucht. Mit einer derartigen systematischen Bild- bzw. Sensorsignalanalyse können sämtliche von den Leuchtdioden erzeugte Leuchtpunkte im Bild schnell erfasst und lokalisiert werden. Aus der Anordnung der Punkte im Bild kann dann eine Orientierung des Tastwerkzeugs 20 und in Zusammenschau mit der Position des Reflektors 21 die exakte räumliche Position und Orientierung des Tastwerkzeugs 20 mit sechs Freiheitsgraden (six degrees of freedom = 6-DoF) bestimmt werden. Aus der definierten Position des Kontaktpunkts 23 zu den Markierungen 22 und dem Reflektor 21 ist damit eine Kontaktpunktposition ebenfalls exakt bestimmt.

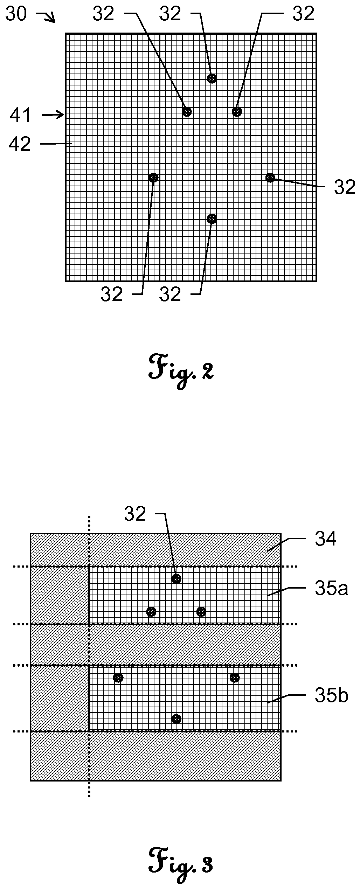

Figur 2 zeigt einen Bilderfassungssensor 30 für ein erfindungsgemässes Bildanalyseverfahren. Der Sensor 30, beispielsweise ein CMOS, ist dabei aus Sensorzeilen 41 mit einer definierten Anzahl von Pixeln 42 aufgebaut. Z.B kann ein CMOS 1024 Zeilen 41 zu je 1024 Pixeln 42 aufweisen. Bei der Aufnahme eines Bildes mit diesem Sensor 30 erfasst jeder einzelne Pixel 42 eine Bildinformation, die wiederum pixelweise aus dem Sensor 30 auslesbar ist. Ferner sind auf dem Sensor 30 Lichtpunktpositionen 32 von mit dem Sensor 30 erfassten Lichtpunkten, die insbesondere von Leuchtdioden am Tastwerkzeug erzeugt werden, dargestellt.

Figur 3 zeigt eine erste Ausführung einer erfindungsgemässen Bildauswertung zur Lokalisation von Lichtpunkten 32 im Bild. Dabei werden durch eine Definition von Interessens-Bereichen 35a,35b (region of interest = ROI) auf dem Sensor nur diejenigen Bildinformation der Pixel innerhalb der Bereiche 35a,35b zur Bildverarbeitung herangezogen. Die Bildinformation des restlichen Sensorbereichs 34 wird dabei nicht weiter berücksichtigt. Mit dieser Technik kann die zu analysierende Datenmenge deutlich reduziert und so die Geschwindigkeit des Bildverarbeitungsprozesses erhöht werden. Die Bestimmung der Interessens-Bereiche 35a,35b wird in dieser Ausführung derart vorgenommen, dass grossflächige, zusammenhängende Sensorregionen bei der Bildanalyse ausgespart bleiben und die zu detektierenden Lichtpunkte 32 innerhalb der Interessens-Bereiche 35a,35b liegen. Die Grösse und Lage dieser Interessens-Bereiche 35a,35b auf dem Sensor können fortlaufend aktualisiert werden, wobei z.B. eine Bewegung des Tastwerkzeugs mittels einer mathematischen Analyse antizipiert werden kann. Hierfür können beispielsweise einem Kalman-Filter Messinformationen, wie z.B. Anzahl der Lichtpunkte, Änderung der Lage der Lichtpunkte 32 bezüglich der letzten beiden erfassten Bilder und Entfernung zum Reflektor, zur Verfügung gestellt werden und damit für jeden zu detektierenden Lichtpunkt 32 ein Erwartungswert, insbesondere für eine weitere Veränderung der jeweiligen Lichtpunktposition, bestimmt werden. Schon bei einem noch hohen Abdeckungsgrad des Sensors durch die Interessens-Bereiche 35a,35b und einer damit relativ grossen auszuwerten Sensorfläche kann eine Steigerung des Analysevorgangs erreicht werden. Beispielsweise kann nur ein Interessens-Bereich mit einem im Verhältnis zur Gesamtsensorfläche grossen Abdeckungsbereich schon zu schnelleren Ausleseraten führen. Insbesondere können z.B. zehn Interessens-Bereiche (multiple regions of interest = MROI) bei zehn zu detektierenden Hilfspunkt-Markierungen mit jeweils einer vergleichsweise kleinen zu-berücksichtigenden Fläche gesetzt werden und damit der Abdeckungsbereich weiter verkleinert und der Analysevorgang weiter beschleunigt werden. Dabei können durch eine bei einer hohen Wiederholrate für das Erfassen von Bildern und für das Setzen der Bereiche die Bereiche kleiner gesetzt werden, um dennoch mit grosser Wahrscheinlichkeit ein Erfassen der Markierung in dem jeweiligen Bereich zu erreichen. Bei einer geringeren Rate können folglich diese hohen Wahrscheinlichkeiten mit grösser gesetzten Interessens-Bereichen erreicht werden.

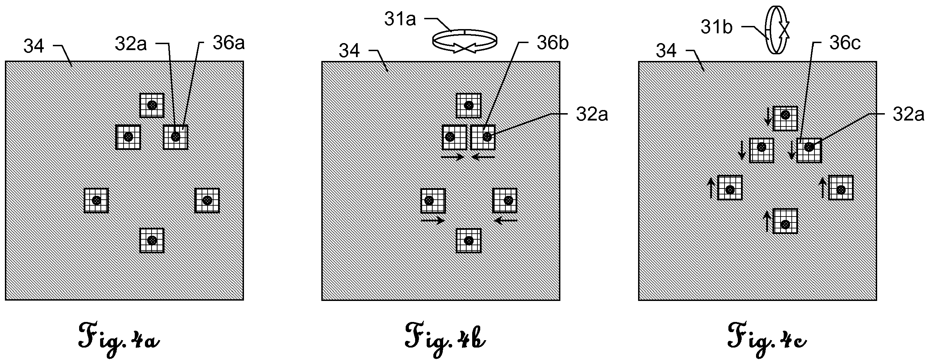

Die Figuren 4a-c zeigen eine zweite Ausführung einer erfindungsgemässen Bildauswertung zur Lokalisation von Lichtpunkten 32a im Bild und die Anpassung der gezeigten Interessens-Bereiche 36a,36b,36c (region of interest = ROI) in Abhängigkeit einer Lageänderung der Lichtpunkte 32a. Ein Hauptteil 34 der Detektionsfläche des Sensors wird in dieser Ausführung nicht zur Erkennung und Positionsbestimmung der Lichtpunkte 32a herangezogen. Figur 4a zeigt beispielhaft einen Lichtpunkt 32a und einen Interessens-Bereich 36a um den Lichtpunkt 32a. Die Bildinformation der Pixel, die innerhalb dieses Interessens-Bereichs 36a liegen, wird zur Detektion des Lichtpunkts 32a an einen Bildverarbeitungsalgorithmus übergeben und zur weiteren Auswertung berücksichtigt. Aufgrund des vorteilhaften Verhältnisses von nicht-zu-berücksichtigenden Bereichen 34 zu zu-berücksichtigenden Bereichen 36a kann die Bildverarbeitung und damit die Bestimmung der Orientierung eines Tastwerkzeugs sehr schnell erfolgen. Figur 4b zeigt eine veränderte Konstellation von Lichtpunkten, wobei hier das in Figur 4a erfasste Tastwerkzeug mit einer veränderten Orientierung erfasst wurde. Die Veränderung der Orientierung ist durch den Doppelpfeil 31a angezeigt. Das Tastwerkzeug wurde somit im Gegensatz zu seiner Ausrichtung in Figur 4a um eine vertikale Achse gedreht, wodurch die auf dem Sensor erfassten Lichtpunkte jeweils in einer horizontalen Richtung näher zusammen rücken (siehe Pfeile). Ausserdem wird der Interessens-Bereich 36b des Sensors, z.B. auf Basis von Berechungen des Kalman-Filters, derart verschoben, dass bei einer weiteren Rotation des Tastwerkzeugs um die vertikale Achse und einem damit verbundenen weiteren Zusammenrückenrücken der Lichtpunkte diese mit einer hohen Wahrscheinlichkeit in der jeweiligen ROI liegen, insbesondere der Lichtpunkt 32a mit einer hohen Wahrscheinlichkeit in dem Interessens-Bereich 36b liegt. Mittels dieser Vordefinition der Lage des Interessens-Bereichs 36b kann eine erwartete Veränderung der Orientierung bzw. der Ausrichtung des Tastwerkzeugs bei der Detektion und Auswertung des Lichtpunkts 32a berücksichtigt werden. Ein weiteres Beispiel für die Antizipation der Orientierungsänderung ist in Figur 4c gezeigt, wobei die Ausrichtung dabei um eine horizontale Achse - wie durch den Pfeil 31b angezeigt - und eine Lageänderung des Interessens-Bereichs 36c in vertikaler Richtung (siehe Pfeile) erfolgt.

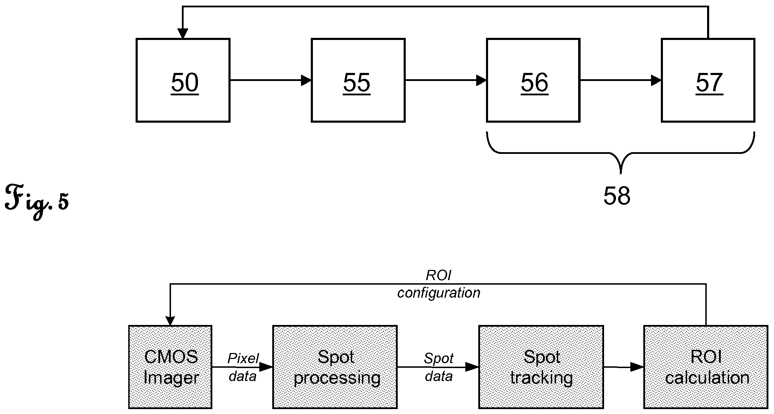

Figur 5 zeigt den Ablauf der erfindungsgemässen Bilderfassung und -auswertung nach der ersten und/oder zweiten Ausführung in einem Blockdiagramm. Zunächst wird ein Bild mit einem CMOS-Sensor 50 erfasst. Aus dem Sensor 50 werden die Pixeldaten ausgelesen und einer Lichtpunktauswertung 55 zugeführt. Die dabei generierten Lichtpunktdaten, wie z.B. Lage oder Grösse der Punkte, werden einer Lichtpunkt-Verfolgungseinheit 56 übergeben, wobei mittels einer Interessens-Bereichs-Berechnungseinheit 57 Informationen zur Konfiguration des CMOS-Sensors generiert und an diesen übermittelt werden. Durch die derartige erfindungsgemässe Interessens-Bereichs-Kontrolleinheit 58, die die Lichtpunktverfolgung 56 und die ROI-Berechnung 57 aufweist, kann so der Datenstrom zwischen dem CMOS-Sensor 50 und der Lichtpunktauswertung 55 optimiert und eine schnellere Datenauswertung erzielt werden.

Dabei werden zunächst nur die relevanten Sensordaten innerhalb der ROIs ausgelesen, dann die Punkte detektiert und mittels eines Punktverfolgungsalgorithmus die optimale Grösse, Position und Anzahl von Interessens-Bereichen (ROIs) ermittelt. Zudem können - insbesondere zur Verbesserung der Prozesseffektivität - einige Punkte zu einer Punktgruppe zusammengefasst werden. Ferner können - mittels eines entsprechend ausgestalteten Sensors - die Interessens-Bereiche auf dem Sensor anhand der bei der Punktverfolgung generierten Informationen in Echtzeit angepasst werden, wobei jeder Punkt einzeln verfolgt werden kann und entsprechend jeder Interessens-Bereich unabhängig aktualisierbar ist. Ausserdem können durch den Punktverfolgungsalgorithmus Punktbewegung derart berechnet werden, dass die Lage einzelner Punkten auch ausserhalb des Sichtfelds des Sensors bzw. der Kamera bestimmbar ist.

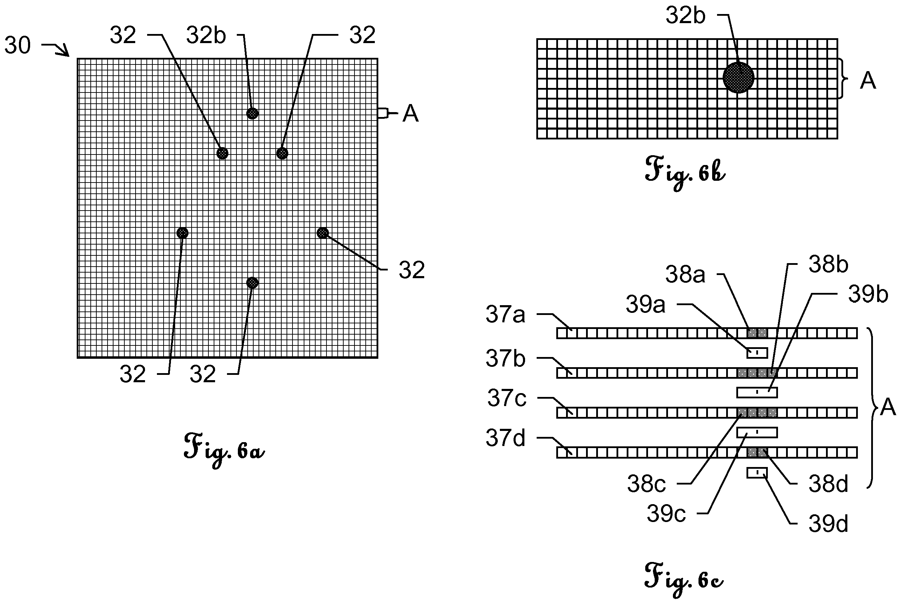

Die Figuren 6a-c zeigen eine weitere Ausführung einer erfindungsgemässen Bildauswertung zur Lokalisation von Lichtpunkten 32,32b im Bild. In Figur 6a ist wiederum ein zeilenweise aufgebauter Sensor 30 mit Positionen von erfassten Lichtpunkten 32,32b gezeigt. Zudem ist ein Sensorbereich A markiert. Figur 6b zeigt eine vergrösserte Darstellung des aus vier Sensorzeilen bestehenden Bereichs A mit dem Lichtpunkt 32b. In Figur 6c ist der Sensorbereich A weiter vergrössert dargestellt, wobei die Zeilen 37a-d des Sensors 30 zur Beschreibung des Verfahrens zur Bildauswertung im Folgenden einzeln betrachtet werden.

Die Auswertung eines mit dem Sensor 30 erfassten Bildes erfolgt zeilenweise. Durch den mit dem Sensor 30 erfassten Lichtpunkt 32b wird mit dem Sensor eine Bildinformation in Abhängigkeit der Lage des Lichtpunkts 32b generiert. Im speziellen erfassen die Pixel 38a-d des Sensors, mit denen die Lage des Lichtpunkts 32b korrespondiert, eine jeweilige Bildinformation, insbesondere wobei diese Information durch eine jeweiliges Pixelsignal repräsentiert wird. Beim Auslesen der ersten gezeigten Sensorzeile 37a werden so die Pixel 38a als solche Pixel 38a erkannt, deren Belichtungszustand, da diese als Teil des Lichtpunkts 32b beleuchtet werden, über einem bestimmten Schwellwert liegt.

Gemäss dem zweiten Aspekt, wird nun diesen Pixeln 38a ein Zeilenstück 39a zugeordnet, welches zum einen die Position der Pixel 38a auf dem Sensor 30 bzw. in der Zeile 37a und zum zweiten die Anzahl der im Zeilenstück 39a enthaltenen Pixel 38a und somit die Grösse des Zeilenstücks 39a aufweist. Zudem wird zu jedem in der Zeile 37a gefundenen Zeilenstück 39a aus der Lage und Anzahl der Pixel 38a ein Pixelschwerpunktanteil berechnet. Diese Schwerpunktberechnung kann sehr schnell, insbesondere in Echtzeit, d.h. einhergehend mit einer Pixel-Auslesegeschwindigkeit, erfolgen. Nachdem die erste Zeile 37a vollständig durchsucht wurde, wird die Suche nach weiteren Pixeln 38b-d, deren Belichtungszustand über dem Schwellwert liegt, in den folgenden Zeilen 37b-d fortgesetzt. Hier erfolgt ebenfalls eine Extraktion von Zeilenstücken 39b-d und eine entsprechende Bestimmung von jeweiligen Schwerpunktanteilen. Gemäss dem zweiten Aspekt, können durch diese Art der Bild- bzw. Sensorsignalauswertung die erfassten Informationen fortlaufend schnell ausgelesen und übergeben werden. Bei Auswerteverfahren nach dem Stand der Technik erfolgt das Auslesen einer kompletten Bildinformation und erst anschliessend ein Weiterverarbeiten dieser Information. Die Zeilenstücke 39a-d stellen dabei kohärente Zeilenbereiche dar, die innerhalb eines Zeilenstücks 39a-d Lücken aufweisen könne. Diese Lücken können beispielsweise durch so genannte "Hot-Pixel" (= Fehlstellen auf dem Sensor) entstehen, wobei einzelne oder mehrere, insbesondere fixe, Pixel "blind" und somit nicht funktionsfähig sein können. Die Positionen derartiger Fehlpixel können für einen (bzw. auf einem) bilderfassenden Sensor vorbekannt sein oder können z.B. aus einem Vergleich vorherig bestimmter Bild-Positionen in erfassten Bildern als Fehlstellen auf dem Sensor erkannt werden. Somit können die kohärenten Zeilenbereiche durch Pixel, deren Belichtungswert über einem vordefinierten Schwellwert liegt, unter Berücksichtigung derartiger Fehlpixel bestimmt sein. Um jene Zeilenstücke 39a-d herauszufinden, die jeweils zu identischen erfassten Punkten gehören, werden normalerweise jene Zeilenstücke 39a-d einander zugeordnet (gruppiert), die sich spaltenweise auf dem Sensor überlappen. Ausserdem kann es im Spezialfall auch vorkommen, dass solche Zeilenstücken 39a-d miteinander zu verbinden sind, die diagonal angrenzend zueinander angeordnet sind, um jeweils die Zeilenstücke 39a-d einander zuzuordnen, die zu identischen Punkten gehören.

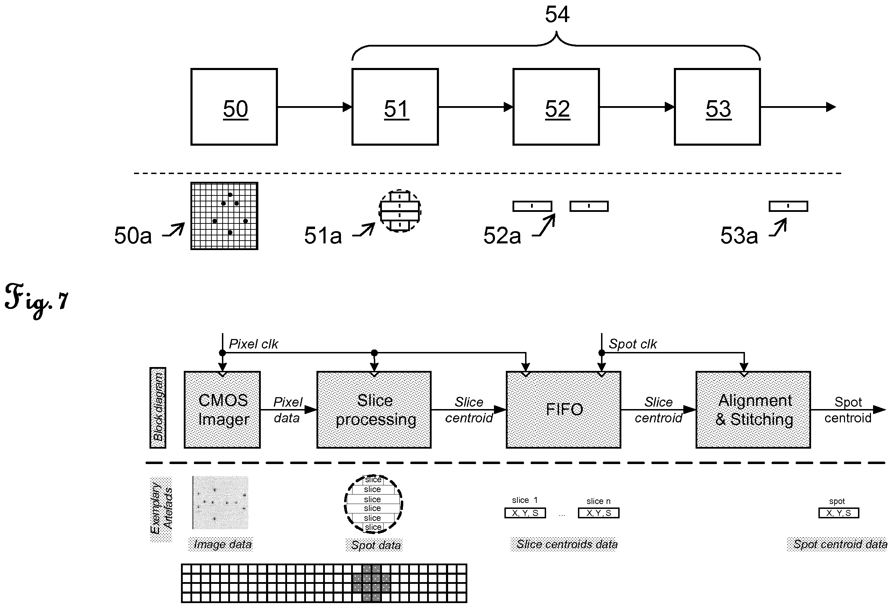

Diese Zeilenstückverarbeitung 51 ist in einem breiteren Zusammenhang in einem Blockdiagramm für einen Ablauf einer Bilderfassung und Bildauswertung - gemäss dem zweiten Aspekt - in Figur 7 dargestellt, wobei zu einem Lichtpunkt gehörige Zeilenstücke 51a gezeigt sind. Die Punkterkennung beginnt hierbei mit dem Erfassen des Bildes 50a mit dem CMOS-Sensor 50. Die mit der Zeilenstückverarbeitung 51 ermittelten Schwerpunktinformationen 52a werden weiters an eine weitere Auswerteeinheit 52, die die eingehenden Daten nach dem FIFO-Prinzip (first-in/first-out) abarbeitet, übergeben und gespeichert. In den FIFO-Speicher gehen dabei Daten mit einer relativ hohen Taktrate und geringen Taktdauer ein und es werden Daten mit einer vergleichsweise geringen Taktrate und hohen Taktdauer ausgegeben. Damit kann jedes Zeilenstück 39a-d durch eine relativ kleine Anzahl von Parametern repräsentiert werden und eine erste, effiziente Datenreduktion in einem frühen Datenverarbeitungsstadium erreicht werden. Bei einem folgenden Zusammenfügen 53 können diejenigen Zeilenstücke 39a-d, die einem Punkt zuzuordnen sind, zusammengefügt und angeordnet werden. Mit den so zusammengefügten Zeilenstücken 39a-d kann nun anhand korrespondierenden Schwerpunktanteilinformationen eine erneute (zeilenübergreifende) Schwerpunktberechnung durchgeführt werden und ein Gesamtschwerpunkt bzw. eine Gesamtschwerpunktinformation 53a für eine Anzahl von Zeilenstücken 39a-d ermittelt werden, welche die Position des jeweils erfassten Lichtpunkts repräsentiert. Bedingt durch einen hohen Rechenaufwand kann das Zusammenfügen 53 und erneute Schwerpunktberechnung dabei mit einer geringeren Verarbeitungsgeschwindigkeit (verglichen mit der Geschwindigkeit für das Auslesen der Pixel) erfolgen. Durch die vorangehende Datenreduzierung wird dabei dennoch nicht die Prozesseffektivität eingeschränkt. Die Zeilenstückverarbeitung 51, die FIFO-Auswerteeinheit 52 und das Zusammenfügen 53 können dabei unter Punkterkennung und Schwerpunktbestimmung 54 zusammengefasst werden.

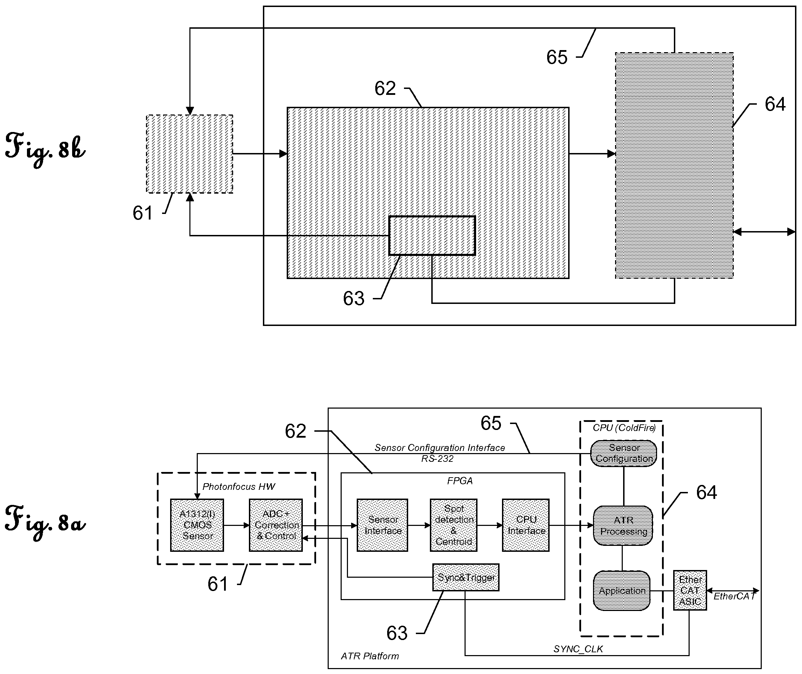

Die Figuren 8a-b zeigen weitere Blockdiagramme, welche den Ablauf einer Bildauswertung von der Bilderfassung 61 bis hin zur Weiterarbeitung der ausgewerteten Bildinformation nach dem Stand der Technik zeigen. In Figur 8a ist dieser Auswerteprozess detailliert dargestellt, wohingegen die Figur 8b den Vorgang vereinfacht darstellt und zur folgenden Beschreibung herangezogen wird.

In einem ersten Schritt erfolgt die Bilderfassung, insbesondere von einem Messhilfsinstrument mit definiert angeordneten Markierungen. Diese Erfassung kann durch eine Synchronisations- und Triggereinheit 63 gesteuert erfolgen bzw. zeitlich definiert ausgelöst werden. Das Bild wird dann zur Bild-Analyse 62 an eine Bildverarbeitungseinheit übergeben, wobei eine Auswertung des Bildes hinsichtlich der bei der Bilderfassung erzeugten Belichtungswerte der Sensorpixel erfolgt. Im Rahmen der Bild-Analyse 62 wird zudem zu jeder im Bild erfassten Markierung des Messhilfsinstruments mathematisch ein Schwerpunkt im Bild und somit eine Bildposition des Schwerpunkts ermittelt. Die Summe der so erzeugten Information wird nun einer weiteren Prozessoreinheit 64 beispielsweise zur Bestimmung der Orientierung des Messhilfsinstruments aus den ermittelten Bildpositionen zur Verfügung gestellt. Zwischen der Prozessoreinheit 64 und der Einheit zur Bilderfassung 61 (CMOS) besteht eine Verbindung 65 mittels derer eine Steuerung des Flächensensors durch die Prozessoreinheit 64 durchführbar ist.

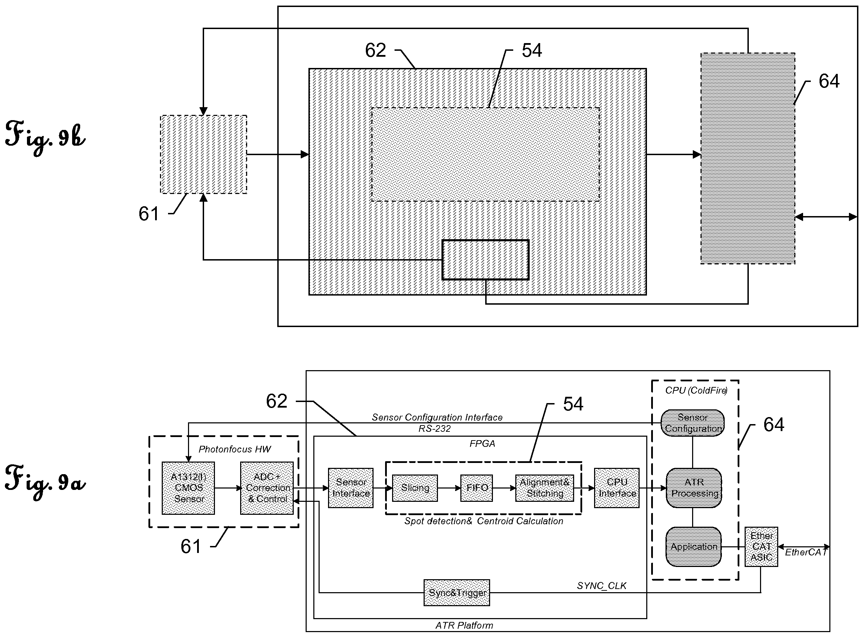

Die Figuren 9a-b zeigen weitere Blockdiagramme, welche den Ablauf einer Bildauswertung - gemäss dem zweiten Aspekt - zeigen. In Figur 9a ist dieser Auswerteprozess detailliert dargestellt, wohingegen wiederum die Figur 9b den Vorgang vereinfacht darstellt und zur folgenden Beschreibung herangezogen wird.

In dieser Ausführung erfolgt die Bildauswertung prinzipiell nach dem Auswertungsablauf gemäss den Figuren 8a-b, wobei die Bild-Analyse 62, gemäss dem zweiten Aspekt, durch die Punkterkennungs- und Schwerpunktbestimmungsfunktionalität 54 angepasst und verbessert ist. Die bei der Bilderfassung 61 erfasste Bildinformation wird via eines Sensor-Interfaces zur Bild-Analyse 62 übertragen, wobei die Auswertung des Bildes mittels der Funktionalität - gemäss dem zweiten Aspekt - 54, die beispielsweise durch einen angepassten Algorithmus ausgeführt wird, erfolgt. Im Rahmen der Funktionalität 54 werden dann die Pixel des Sensors sequenziell hinsichtlich eines jeweils aktuellen Belichtungswerts ausgelesen und anhand von denjenigen Pixeln deren Belichtungswert über einem Schwellwert liegt entsprechende Zeilenstücke extrahiert. Im Anschluss erfolgen eine Berechung eines Schwerpunkts zu jedem Zeilenstück und ein Gruppieren der Stücke, die zu identischen abgebildeten Markierungen des Tastwerkzeugs gehören. Aus den Schwerpunkten der Zeilenstücke einer jeweiligen Gruppierung werden dann Bildpositionen zu den Markierungen abgeleitet (siehe Beschreibung zu Figur 7) und die so generierten Positionsinformationen an die Prozessoreinheit 64 übergeben. Mit dieser Punkterkennungs- und Schwerpunktbestimmungsfunktionalität - gemäss dem zweiten Aspekt - 54 kann die Bild-Analyse 62 schneller erfolgen und damit eine Erhöhung einer Bildverarbeitungsrate erzielt werden. Die Rate der analysierbaren Bilder kann dadurch im Vergleich zur Methode des Standes der Technik gemäss Figuren 8a-b insbesondere um den Faktor sechs erhöht werden.

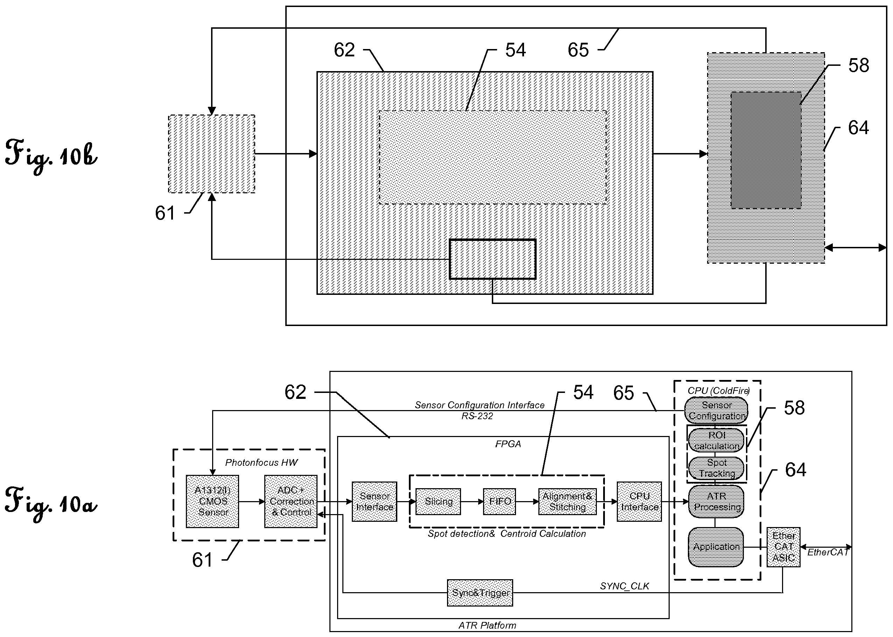

Die Figuren 10a-b zeigen zwei weitere Blockdiagramme, welche den Ablauf einer weiteren Bildauswertung - gemäss dem zweiten Aspekt - zeigen. In Figur 10a ist dieser Auswerteprozess wieder detailliert dargestellt, wohingegen die Figur 10b den Vorgang vereinfacht darstellt und zur folgenden Beschreibung herangezogen wird.

Im Rahmen dieser Ausführung erfolgt die Bildauswertung wiederum prinzipiell nach dem Auswertungsablauf gemäss den Figuren 8a-b, wobei zum einen die Bild-Analyse 62 durch die Punkterkennungs- und Schwerpunktbestimmungsfunktionalität - gemäss dem zweiten Aspekt - 54 angepasst und verbessert ist und zum anderen die Prozessoreinheit 64 eine erfindungsgemässe Interessens-Bereichs-Kontrolleinheit 58 aufweist. Die Interessens-Bereichs-Kontrolleinheit 58 verfügt dabei über eine erfindungsgemässe Funktionalität zur Bestimmung von definierten Interessens-Bereichen (multiple regions of interest = MROI) auf dem Flächensensor der Kamera, wobei die Interessens-Bereiche jeweils eine abgegrenzte Untermenge von zusammenhängenden benachbarten Pixeln aus der Gesamtheit der Pixel des Flächensensors aufweisen. Die Interessens-Bereiche werden dabei mittels der Funktionalität fortlaufend abhängig von einer Ansammlung von in mindestens einem vorhergehend erfassten Kamera-Bild bestimmten Bild-Positionen gesetzt. Es werden - mit anderen Worten ausgedrückt - somit Regionen auf dem CMOS vordefiniert, in denen eine zu erfassende Markierung bei der Aufnahme eines nächsten Bildes erwartungsgemäss erfasst wird. Die Lage und Grösse der jeweiligen Regionen kann dabei insbesondere durch Berechnungen mittels eines Kalman-Filters bestimmt werden. Hierbei können dem Filter eine Vielzahl von messrelevanten Informationen, wie z.B. Entfernung zu den Markierungen, Grösse der Markierungen, Anzahl und Lage der Markierungen auf einem Messhilfsinstrument oder Helligkeitsverteilung in der Messumgebung, zugeführt werden. Die Definition und Anpassung dieser Regionen kann beispielsweise bei einer Orientierungsänderung des Messhilfsinstruments durch eine Drehung um dessen vertikale Achse derart erfolgen, dass die Interessens-Bereiche (ROIs) in der Sensorfläche horizontal so verschoben werden, dass ein durch die Drehung zu erwartendes horizontales Zusammenrücken der Markierungen antizipiert wird und die Markierungen während der Drehung fortlaufend in jeweils einem entsprechend aktualisierten Interessens-Bereich (ROI) liegen. Um zu gewährleisten, dass bei den jeweiligen Auslesedurchgängen jeweils nur die innerhalb der ROIs liegenden Pixel des Sensors ausgelesen werden, kann der Flächensensor derart ausgebildet sein, dass dieser hinsichtlich der jeweiligen Auslesedurchgänge in Echtzeit umkonfigurierbar ist, d.h. dass das Setzen und Definieren der - die Auslesedurchgänge beeinflussenden - Interessens-Bereiche auf dem Sensor in Echtzeit (d.h. mit solchen Raten, mit welchen auch das Bilderfassen bzw. die Auslesedurchgänge erfolgen) erfolgen kann. Dadurch können die Interessens-Bereiche vor jeder Erfassung eines Kamera-Bildes neu definiert und jeweils ein Bild mit an die Messsituation angepassten Interessens-Bereichen erfasst werden (bzw. dabei jeweils nur jene in diesen ROIs liegenden Pixel ausgelesen werden).

Mittels eines Interfaces 65 zwischen der Bilderfassungseinheit 61 und der Prozessoreinheit 64 kann eine Steuerung der Bilderfassungseinheit 61 erfolgen. Dabei können die jeweils mittels der Funktionalität der Interessens-Bereichs-Kontrolleinheit 58 bestimmten und aktualisierten Interessens-Bereiche für den Flächensensor (CMOS) an die Bilderfassungseinheit 61 übergeben werden und in Abhängigkeit davon jeweils nur diejenige Bildinformation an die Bild-Analyse 62 zur Bildverarbeitung mit der Punkterkennungs- und Schwerpunktbestimmungsfunktionalität 54 weitergegeben wird, die innerhalb der so bestimmten Interessens-Bereiche erfasst wird. Aus dieser Weiterverarbeitung resultieren dann (wie oben beschrieben) die Bildpositionen für die erfassten Markierungen, aus denen eine Orientierung des Messhilfsinstruments ableitbar ist.

Mit dieser Kombination aus der Punkterkennungs- und Schwerpunktbestimmungsfunktionalität - gemäss dem zweiten Aspekt - 54 und der Funktionalität der erfindungsgemässen Interessens-Bereichs-Kontrolleinheit 58 kann die Effizienz der Bildverarbeitung und -auswertung weiter verbessert werden und eine weitere Erhöhung einer Bildverarbeitungsrate erzielt werden. Die Rate der analysierbaren Bilder kann dabei im Vergleich zur Methode des Standes der Technik gemäss Figuren 8a-b insbesondere um den Faktor zwölf erhöht werden.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren zur Bestimmung einer räumlichen Lage eines Objekts, mit Verfahren zur Bildauswertung und mit Messgeräten des Stands der Technik kombiniert werden. So können die erfindungsgemässen Aspekte auch Anwendung finden für das Steuern der fortlaufenden Auslesevorgänge eines Flächensensors von geodätischen Vermessungsgeräten - wie Totalstationen und Tachymeter (insbesondere dabei für die Flächensensoren für die Zielverfolgung von Reflektor-Prismen) - bzw. für die fortlaufende Auswertung der dabei erfassten Bilder.

## Patentansprüche

1. Lagebestimmungsverfahren mithilfe eines Lasertrackers (11), zum fortlaufenden Bestimmen der räumlichen Lage eines mehrere Hilfspunkt-Markierungen (22) in fixer bekannter räumlicher Verteilung relativ zueinander aufweisenden Messhilfsinstruments (20),
mit
• einem fortlaufenden Erfassen von Kamera-Bildern (50a) von den Hilfspunkt-Markierungen (22) mit einer Kamera (12,61) mit einem eine Vielzahl von Pixeln (38a-d,42) aufweisenden Flächensensor (30,50),
• einem fortlaufenden Durchführen von Auslesedurchgängen, bei welchen zumindest einige der Pixel (38a-d,42) hinsichtlich eines jeweils aktuellen Belichtungswerts ausgelesen werden,
• einem fortlaufenden Bestimmen von Bild-Positionen für die abgebildeten Hilfspunkt-Markierungen (32,32a,32b) im jeweils aktuellen Kamera-Bild (50a) abhängig von im Rahmen des jeweils aktuellen Auslesedurchgangs erhaltenen Belichtungswerten, und
• einem fortlaufenden Ableiten der jeweils aktuellen räumlichen Lage des Messhilfsinstruments (20) basierend auf den aktuellen Bild-Positionen und auf der fixen bekannten räumlichen Verteilung der Hilfspunkt-Markierungen (22) relativ zueinander,
**dadurch gekennzeichnet, dass**
• ein fortlaufendes Setzen von jeweils aktuellen Interessens-Bereichen (35a,35b,36a,36b,36c) auf dem Flächensensor (30,50) abhängig von einer Sammlung von den in mindestens einem vorgängig erfassten Kamera-Bild (50a) bestimmten Bild-Positionen erfolgt, wobei die Interessens-Bereiche (35a,35b,36a,36b,36c) jeweils eine abgegrenzte Untermenge von zusammenhängenden benachbarten Pixeln (38a-d,42) aus der Gesamtheit der Pixel (38a-d,42) des Flächensensors (30,50) definiert, wobei für das Setzen der Interessens-Bereiche (35a,35b,36a,36b,36c) jeweils ein Erwartungswert für die aktuellen Bild-Positionen ermittelt wird aus einer Sammlung von den in mehreren vorgängig aufeinanderfolgend erfassten Kamera-Bildern (50a) bestimmten Bild-Positionen, und
• das Bestimmen der aktuellen Bild-Positionen unter Berücksichtigung von ausschliesslich maximal jenen aktuellen Belichtungswerten erfolgt, die von innerhalb von den aktuell gesetzten Interessens-Bereichen (35a,35b,36a,36b,36c) liegenden Pixeln (38a-d,42) des Flächensensors (30,50) erhalten sind.

2. Lagebestimmungsverfahren nach Anspruch 1,
**dadurch gekennzeichnet, dass**
die jeweiligen aktuellen Auslesedurchgänge derart durchgeführt werden, dass jeweils nur genau die innerhalb der aktuellen Interessens-Bereiche (35a,35b,36a,36b,36c) liegenden Pixel (38a-d, 42) ausgelesen werden.

3. Lagebestimmungsverfahren nach Anspruch 1 oder 2,
**dadurch gekennzeichnet, dass**
das Ermitteln der Erwartungswerte anhand eines Kalman-Filters erfolgt.

4. Lagebestimmungsverfahren nach einem der vorhergehenden Ansprüche,
**dadurch gekennzeichnet, dass**
das Bestimmen der Bild-Positionen jeweils erfolgt durch die folgenden Schritte
• Filtern von Pixeln (38a-d,42), für die der beim Auslesen erhaltene Belichtungswert ein Schwellwertkriterium erfüllt, insbesondere oberhalb eines Schwellwerts liegt,
• Zusammenfügen von jeweils in einer Zeile (37a-d,41) des Flächensensors (30,50) kohärente Zeilenbereiche bildenden gefilterten Pixeln (38a-d,42) zu Pixel-Scheiben (39a-d,51a),
• Ermitteln von jeweiligen Schwerpunktanteilen für jede der Pixel-Scheiben (39a-d,51a),
• Gruppieren der Pixel-Scheiben (39a-d,51a) derart, dass jeweils solche Pixel-Scheiben (39a-d,51a) einander zugeordnet sind, die jeweils zu einer der abgebildeten Hilfspunkt-Markierungen (32,32a,32b) gehören, und
• Ableiten der Bild-Positionen der Hilfspunkt-Markierungen (32,32a,32b) jeweils anhand von den entsprechenden jeweiligen Schwerpunktanteilen der jeweils einander zugeordneten Pixel-Scheiben (39a-d,51a),
insbesondere wobei die Schritte des Filterns, des Zusammenfügens (53) zu Pixel-Scheiben (39a-d,51a) und des Ermittelns der Schwerpunktanteile mit einer ersten, vergleichsweise hohen Takt-Rate erfolgt, die im Speziellen der Pixelauslese-Takt-Rate entspricht, und die Schritte des Gruppierens und des Bestimmens der jeweiligen Bild-Positionen mit einer zweiten, vergleichsweise niedrigen Takt-Rate erfolgen.

5. Lasertracker (11) zur fortlaufenden Bestimmung der räumlichen Lage eines mehrere Hilfspunkt-Markierungen (22) in fixer bekannter räumlicher Verteilung relativ zueinander aufweisenden Messhilfsinstruments (20),
mit
• einer Kamera (12,61) zur fortlaufenden Erfassung von Kamera-Bildern (50a) von den mehreren Hilfspunkt-Markierungen (22), mit einem eine Vielzahl von Pixeln (38a-d,42) aufweisenden Flächensensor (30,50), und
• einer Auswerte- und Steuereinheit, die ausgebildet ist
□ zur Steuerung von fortlaufend durchführbaren Auslesedurchgängen, bei welchen zumindest einige der Pixel (38a-d,42) hinsichtlich eines jeweils aktuellen Belichtungswerts ausgelesen werden,
□ zur fortlaufenden Bestimmung von Bild-Positionen für die abgebildeten Hilfspunkt-Markierungen (32,32a,32b) im jeweils aktuellen Kamera-Bild (50a) abhängig von im Rahmen des jeweils aktuellen Auslesedurchgangs erhaltenen Belichtungswerten und
□ zur fortlaufenden Ableitung der jeweils aktuellen räumlichen Lage des Messhilfsinstruments (20) basierend auf den aktuellen Bild-Positionen und auf der fixen bekannten räumlichen Verteilung der Hilfspunkt-Markierungen (22) relativ zueinander,
**dadurch gekennzeichnet, dass**
die Auswerte- und Steuereinheit ferner ausgebildet ist
• zur fortlaufenden Setzung von jeweils aktuellen Interessens-Bereichen (35a,35b,36a,36b,36c) auf dem Flächensensor (30,50) abhängig von einer Sammlung von den in mindestens einem vorgängig erfassten Kamera-Bild (50a) bestimmten Bild-Positionen, wobei die Interessens-Bereiche (35a,35b,36a,36b,36c) jeweils eine abgegrenzte Untermenge von zusammenhängenden benachbarten Pixeln (38a-d,42) aus der Gesamtheit der Pixel (38a-d,42) des Flächensensors (30,50) definiert, wobei für das Setzen der Interessens-Bereiche (35a,35b,36a,36b,36c) jeweils ein Erwartungswert für die aktuellen Bild-Positionen ermittelt wird aus einer Sammlung von den in mehreren vorgängig aufeinanderfolgend erfassten Kamera-Bildern (50a) bestimmten Bild-Positionen, und
• zur Berücksichtigung von ausschliesslich maximal solchen aktuellen Belichtungswerten für die Bestimmung der jeweils aktuellen Bild-Positionen, die von innerhalb von den aktuell gesetzten Interessens-Bereichen (35a,35b,36a,36b,36c) liegenden Pixeln (38a-d,42) des Flächensensors erhalten sind.

6. Lasertracker nach Anspruch 5,
**dadurch gekennzeichnet, dass**
die Auswerte- und Steuereinheit ausgebildet ist zur Steuerung der Auslesedurchgänge derart, dass jeweils genau nur die innerhalb der aktuellen Interessens-Bereiche (35a,35b,36a,36b,36c) liegenden Pixel (38a-d,42) ausgelesen werden.

7. Lasertracker nach Anspruch 5 oder 6,
**dadurch gekennzeichnet, dass**
das, durch die Auswerte- und Steuereinheit erfolgende Ermitteln des Erwartungswerts anhand eines Kalman-Filters erfolgt.

8. Messsystem aus
• einem Lasertracker nach einem der Ansprüche 5 bis 7 und
• einem mehrere Hilfspunkt-Markierungen (22), insbesondere Lichtpunkte, in fixer bekannter räumlicher Verteilung relativ zueinander aufweisenden Messhilfsinstrument (20), insbesondere wobei das Messhilfsinstrument (20) zusätzlich zu den Hilfspunkt-Markierungen (22) einen Retro-Reflektor (21) aufweist.

9. Computerprogrammprodukt mit Programmcode, der auf einem maschinenlesbaren Träger gespeichert ist, zur Steuerung bzw. Durchführung des Lagebestimmungsverfahrens nach einem der Ansprüche 1 bis 4, insbesondere wenn das Programm auf einem FPGA oder ASIC ausgeführt wird.

## Claims

1. A position determining method with the aid of a laser tracker (11), for continuously determining the spatial position of an auxiliary measuring instrument (20) having a plurality of auxiliary point markings (22) in fixed known spatial distribution relative to one another, comprising
• continuously detecting camera images (50a) of the auxiliary point markings (22) by means of a camera (12, 61) with an area sensor (30, 50) having a multiplicity of pixels (38a-d, 42),
• continuously carrying out read-out passes in which at least some of the pixels (38a-d, 42) are read out with regard to a respective current exposure value,
• continuously determining image positions for the imaged auxiliary point markings (32, 32a, 32b) in the respective current camera image (50a) depending on exposure values obtained in the context of the respective current read-out pass, and
• continuously deriving the respective current spatial position of the auxiliary measuring instrument (20) on the basis of the current image positions and the fixed known spatial distribution of the auxiliary point markings (22) relative to one another,
**characterized in that**
• respective current regions of interest (35a, 35b, 36a, 36b, 36c) are continuously set on the area sensor (30, 50) depending on a collection of the determined image positions in at least one previously detected camera image (50a), wherein the regions of interest (35a, 35b, 36a, 36b, 36c) in each case define a delimited subset of contiguous neighboring pixels (38a-d, 42) from the totality of the pixels (38a-d, 42) of the area sensor (30, 50), wherein for setting the regions of interest (35a, 35b, 36a, 36b, 36c) an expected value for the current image positions in each case is ascertained from a collection of the image positions determined in a plurality of previously successively detected camera images (50a), and
• the current image positions are determined taking account of exclusively at most those current exposure values which are obtained from pixels (38a-d, 42) of the area sensor (30, 50) which lie within the currently set regions of interest (35a, 35b, 36a, 36b, 36c).

2. The position determining method as claimed in claim 1,
**characterized in that**
the respective current read-out passes are carried out in such a way that in each case only exactly the pixels (38a-d, 42) which lie within the current regions of interest (35a, 35b, 36a, 36b, 36c) are read out.

3. The position determining method as claimed in claim 1 or 2,
**characterized in that**
the ascertaining of the expected values is carried out with the aid of a Kalman filter.

4. The position determining method as claimed in any one of the preceding claims,
**characterized in that**
the image positions are determined by the following steps
• filtering pixels (38a-d, 42) for which the exposure value obtained during read-out fulfills a threshold value criterion, in particular lies above a threshold value,
• joining together filtered pixels (38a-d, 42) that form line regions that are coherent in a line (37a-d, 41) of the area sensor (30, 50) in each case to form pixel slices (39a-d, 51a),
• ascertaining respective centroid portions for each of the pixel slices (39a-d, 51a),
• grouping the pixel slices (39a-d, 51a) in such a way that such pixel slices (39a-d, 51a) which in each case belong to one of the imaged auxiliary point markings (32, 32a, 32b) are in each case assigned to one another, and
• deriving the image positions of the auxiliary point markings (32, 32a, 32b) in each case with the aid of the corresponding respective centroid portions of the pixel slices (39a-d, 51a) which are in each case assigned to one another,
in particular wherein the steps of filtering, joining together (53) to form pixel slices (39a-d, 51a) and ascertaining the centroid portions is carried out with a first, comparatively high, clock rate, which specifically corresponds to the pixel read-out clock rate, and the steps of grouping and determining the image positions are carried out with a second, comparatively low, clock rate.

5. A laser tracker (11) for continuously determining the spatial position of an auxiliary measuring instrument (20) having a plurality of auxiliary point markings (22) in fixed known spatial distribution relative to one another, comprising
• a camera (12, 61) for continuously detecting camera images (50a) of the auxiliary point markings (22), with an area sensor (30, 50) having a multiplicity of pixels (38a-d, 42), and
• an evaluation and control unit, which is designed
o for controlling read-out passes which can be carried out continuously and in which at least some of the pixels (38a-d, 42) are read out with regard to a respective current exposure value,
o for continuously determining image positions for the imaged auxiliary point markings (32, 32a, 32b) in the respective current camera image (50a) depending on exposure values obtained in the context of the respective current read-out pass, and
o for continuously deriving the respective current spatial position of the auxiliary measuring instrument (20) on the basis of the current image positions and of the fixed known spatial distribution of the auxiliary point markings (22) relative to one another,
**characterized in that**
the evaluation and control unit is furthermore designed
• for continuously setting in each case current regions of interest (35a, 35b, 36a, 36b, 36c) on the area sensor (30, 50) depending on a collection of the image positions determined in at least one previously detected camera image (50a), wherein the regions of interest (35a, 35b, 36a, 36b, 36c) in each case define a delimited subset of contiguous neighboring pixels (38a-d, 42) from the totality of the pixels (38a-d, 42) of the area sensor (30, 50), wherein for setting the regions of interest (35a, 35b, 36a, 36b, 36c) an expected value for the current image positions in each case is ascertained from a collection of the image positions determined in a plurality of previously successively detected camera images (50a), and
• for taking account - for the determination of the respective current image positions - of exclusively at most those current exposure values which are obtained from pixels (38a-d, 42) of the area sensor which lie within the currently set regions of interest (35a, 35b, 36a, 36b, 36c).

6. The laser tracker as claimed in claim 5,
**characterized in that**
the evaluation and control unit is designed for controlling the read-out passes in such a way that in each case only exactly the pixels (38a-d, 42) which lie within the current regions of interest (35a, 35b, 36a, 36b, 36c) are read out.

7. The laser tracker as claimed in claim 5 or 6,
**characterized in that**
the ascertaining of the expected value by means of the evaluation and control unit is carried out with the aid of a Kalman filter.

8. A measuring system comprising
• a laser tracker as claimed in any one of claims 5 to 7 and
• an auxiliary measuring instrument (20) having a plurality of auxiliary point markings (22), in particular light points, in fixed known spatial distribution relative to one another, in particular wherein the auxiliary measuring instrument (20) has a retroreflector (21) in addition to the auxiliary point markings (22).

9. A computer program product having program code stored on a machine-readable carrier,
for controlling or carrying out the position determining method as claimed in any one of claims 1 to 4,
in particular if the program is executed on an FPGA or ASIC.

## Revendications

1. Procédé de détermination de position à l'aide d'une poursuite laser (11), pour la détermination continue de la position spatiale d'un instrument de mesure (20) comportant plusieurs marquages de point auxiliaire (22) dans une distribution spatiale relative connue et fixée, avec
• une capture continue d'images caméra (50a) des marquages de point auxiliaire (22) à l'aide d'une caméra (12, 61) dotée d'un capteur de surface (30, 50) comportant une pluralité de pixels (38a-d, 42),
• une exécution continue de passages de lecture, lors desquels au moins quelques-uns des pixels (38a-d, 42) sont lus par rapport à une valeur d'exposition actuelle respective,
• une détermination continue de positions d'image pour les marquages de point auxiliaire (32, 32a, 32b) visualisés dans l'image actuelle respective (50a) en fonction des valeurs d'exposition obtenues dans le cadre du passage de lecture actuel respectif, et
• une dérivation continue de la position spatiale actuelle respective de l'instrument de mesure (20) en se basant sur les positions actuelles d'image et sur la distribution spatiale relative connue et fixée des marquages de point auxiliaire (22),
**caractérisé en ce**
• **qu'**un placement continu de zones d'intérêt actuelles respectives (35a, 35b, 36a, 36b, 36c) sur le capteur de surface (30, 50) s'effectue en fonction d'une collection de positions d'image déterminées dans au moins une image caméra (50a) préalablement capturée, dans lequel les zones d'intérêt (35a, 35b, 36a, 36b, 36c) définissent respectivement un sous-ensemble borné de pixels voisins consécutifs (38a-d, 42) issus de la totalité des pixels (38a-d, 42 du capteur de surface (30, 50), dans lequel pour le placement des zones d'intérêt (35a, 35b, 36a, 36b, 36c) une valeur attendue respective est respectivement calculée pour les positions d'image actuelles à partir d'une collection de positions d'image déterminées dans plusieurs images caméra (50a) préalablement capturées l'une après l'autre, et
• la détermination des positions d'image actuelles s'effectue en prenant en compte ces valeurs actuelles d'expositions exclusivement maximales, qui sont obtenues parmi les pixels (38a-d, 42) du capteur de surface (30, 50) qui sont à l'intérieur des zones d'intérêt (35a, 35b, 36a, 36b, 36c) actuellement placées.

2. Procédé de détermination de position selon la revendication 1, **caractérisé en ce que** le passage de lecture actuel est réalisé de telle sorte que tous les pixels (38a-d, 42) qui sont à l'intérieur des zones d'intérêt (35a, 35b, 36a, 36b, 36c) actuelles sont lus, à l'exclusion de tout autre.

3. Procédé de détermination de position selon la revendication 1 ou 2, **caractérisé en ce que** la détermination de la valeur attendue s'effectue à l'aide d'un filtre Kalman.

4. Procédé de détermination de position selon l'une des revendications précédentes, **caractérisé en ce que** la détermination des positions d'image s'effectue respectivement par les étapes suivantes
• filtrage des pixels (38a-d, 42) pour lesquels la valeur d'exposition obtenue lors de la lecture remplit un critère de valeur seuil, en particulier est supérieure à une valeur seuil,
• assemblage des pixels filtrés (38a-d, 42) formant une zone de ligne cohérente dans une ligne (37a-d, 41) du capteur de surface (30, 50) en tranches de pixels (39a-d, 51a),
• calcul des fractions de point focal respectives pour chacune des tranches de pixels (39a-d, 51a),
• groupement des tranches de pixels (39a-d, 51a) de telle sorte que des tranches de pixels (39a-d, 51a) appartenant respectivement à un des marquages de point auxiliaire (32, 32a, 32b) visualisés sont ordonnées l'une à l'autre, et
• dérivation des positions d'image des marquages de point auxiliaire (32, 32a, 32b) respectivement à l'aide des fractions de point focal correspondantes des tranches de pixels (39a-d, 51a) respectivement ordonnées,
en particulier dans lequel les étapes du filtrage, de l'assemblage (53) en tranches de pixels (39a-d, 51a) et le calcul des fractions de point focal s'effectuent avec un premier rythme d'horloge, de préférence comparativement élevé, correspondant notamment au rythme d'horloge de la lecture des pixels, et les étapes du groupement et de la détermination des positions d'image respectives s'effectuent avec un deuxième rythme d'horloge, de préférence comparativement réduit.

5. Poursuite laser (11) pour la détermination continue de la position spatiale d'un instrument de mesure (20) comprenant plusieurs marquages de point auxiliaire (22) dans une distribution spatiale relative connue et fixée, dotée
• d'une caméra (12, 61) pour la capture continue d'images caméra (50a) des plusieurs marquages de point auxiliaire (22), dotée d'un capteur de surface (30, 50) comportant une pluralité de pixels (38a-d, 42), et
• d'une unité de contrôle et de commande, conçue pour
∘ la commande de passages de lecture exécutables en continu, lors desquels au moins quelques-uns des pixels (38a-d, 42) sont lus par rapport à une valeur d'exposition actuelle respective,
∘ la détermination continue de positions d'image pour les marquages de point auxiliaire (32, 32a, 32b) visualisés dans l'image actuelle respective (50a) en fonction des valeurs d'exposition obtenues dans le cadre du passage de lecture actuel respectif et
∘ la dérivation continue de la position spatiale actuelle respective de l'instrument de mesure (20) en se basant sur les positions actuelles d'image et sur la distribution spatiale relative connue et fixée des marquages de point auxiliaire (22),
**caractérisée en ce que**
l'unité de contrôle et de commande est en outre conçue
• pour le placement continu de zones d'intérêt actuelles respectives (35a, 35b, 36a, 36b, 36c) sur le capteur de surface (30, 50) en fonction d'une collection de positions d'image déterminées dans au moins une image caméra (50a) préalablement capturée, dans laquelle les zones d'intérêt (35a, 35b, 36a, 36b, 36c) définissent respectivement un sous-ensemble borné de pixels voisins consécutifs (38a-d, 42) issus de la totalité des pixels (38ad, 42 du capteur de surface (30, 50), dans laquelle pour le placement des zones d'intérêt (35a, 35b, 36a, 36b, 36c) une valeur attendue respective est respectivement déterminée pour les positions d'image actuelles à partir d'une collection de positions d'image déterminées dans plusieurs images caméra (50a) préalablement capturées l'une après l'autre, et
• pour la prise en compte des valeurs actuelles d'expositions exclusivement maximales pour la détermination des positions d'image actuelles, qui sont obtenues parmi les pixels (38a-d, 42) du capteur de surface qui sont à l'intérieur des zones d'intérêt (35a, 35b, 36a, 36b, 36c) actuellement placées.

6. Poursuite laser selon la revendication 5, **caractérisée en ce que** l'unité de contrôle et de commande est conçue pour commander le passage de lecture de telle sorte que tous les pixels (38a-d, 42) qui sont à l'intérieur des zones d'intérêt (35a, 35b, 36a, 36b, 36c) actuelles sont lus, à l'exclusion de tout autre.

7. Poursuite laser selon la revendication 5 ou 6, **caractérisée en ce que** la détermination de la valeur attendue s'effectue à l'aide d'un filtre Kalman.

8. Système de mesure formé
• d'une poursuite laser selon l'une des revendications 5 à 7 et
• d'un instrument de mesure (20) comportant plusieurs de marquages de point auxiliaire (22), en particulier de points lumineux, dans une distribution spatiale relative connue et fixée, en particulier dans lequel l'instrument de mesure (20) comporte un rétro-réflecteur (21) en plus des marquages de point auxiliaire (22).

9. Produit-programme informatique doté de code de programmation enregistré sur un support lisible par machine, pour la commande ou l'exécution d'un procédé de détermination de position selon l'une des revendications 1 à 4, en particulier lorsque le programme est exécuté sur un circuit logique programmable (FGPA) ou un ASIC.
